(19) Europäisches Patentamt
European Patent Office
Office européen des brevets

(11) **EP 4 797 817 A1**

(12) **EUROPEAN PATENT APPLICATION**
published in accordance with Art. 153(4) EPC

(43) Date of publication:
**26.08.2026 Bulletin 2026/35**

(21) Application number: **24878911.7**

(22) Date of filing: **12.10.2024**

(51) International Patent Classification (IPC):
***H04W 52/14*** *(2009.01)*

(52) Cooperative Patent Classification (CPC):
**H04L 5/14; H04W 52/14; H04W 52/18; H04W 74/0833**

(86) International application number:
**PCT/CN2024/124292**

(87) International publication number:
**WO 2025/082267 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.10.2023 CN 202311361040**

(71) Applicant: **Vivo Mobile Communication Co., Ltd.**
**Dongguan, Guangdong 523863 (CN)**

(72) Inventors:
- **CHEN, Xiaohang**
  **Dongguan, Guangdong 523863 (CN)**
- **LIN, Zhipeng**
  **Dongguan, Guangdong 523863 (CN)**
- **LU, Zhi**
  **Dongguan, Guangdong 523863 (CN)**

(74) Representative: **Walaski, Jan Filip et al**
**Venner Shipley LLP**
**TIDE Bankside**
**8 Emerson Street**
**London SE1 9DU (GB)**

# (54) POWER CONTROL METHODS AND APPARATUS, TERMINAL AND NETWORK SIDE DEVICE

(57) The present application belongs to the technical field of communications. Disclosed are power control methods and apparatus, a terminal and a network side device. A power control method in an embodiment of the present application comprises: when a terminal operates in a full-duplex mode, the terminal determines a transmission power of a first random access message on the basis of random access related information, the random access related information comprising at least one of the following: related information of the resource type of a first transmission resource and the resource position of the first transmission resource, the first transmission resource being a transmission resource of a target random access message, and the target random access message comprising at least one of the first random access message and a second random access message.

In a case that a terminal operates in a full duplex mode, the terminal determines a transmit power of a first random access message based on random access related information

301

FIG. 3



Processed by Luminess, 75001 PARIS (FR)

## Description

## CROSS-REFERENCE TO RELATED APPLICATIONS

The present application claims priority to Chinese Patent Application No. 202311361040.4 filed in China on October 19, 2023, which is incorporated herein by reference in its entirety.

## TECHNICAL FIELD

The present application belongs to the field of communication technology, and specifically relates to a power control method, a power control apparatus, a terminal, and a network-side device.

## BACKGROUND

When a terminal operates in a full duplex mode, in the case of receiving downlink transmission transmitted by a network-side device (for example, a base station), the terminal may suffer interference from signals of uplink transmissions performed by the terminal itself, that is, self-interference. If the terminal initiates random access while receiving downlink transmissions, the impact of self-interference is related to the transmit power of the random access message transmitted by the terminal. However, in the related art, there is no corresponding solution for how to control the transmit power of the random access message when the terminal operates in the full duplex mode, which makes it difficult to ensure full duplex transmission performance.

## SUMMARY

Embodiments of the present application provide a power control method, a power control apparatus, a terminal, and a network-side device, so as to provide a control method for the transmit power of a random access message when the terminal operates in the full duplex mode, so that the transmit power of the random access message can better adapt to the transmission in the full duplex mode, thereby facilitating the guarantee of full duplex transmission performance.

According to a first aspect, a power control method is provided. The method includes:

in a case that a terminal operates in a full duplex mode, determining, by a terminal, a transmit power of a first random access message based on random access related information; where
the random access related information includes at least one of the following: a resource type of a first transmission resource, and resource location related information of the first transmission resource. The first transmission resource is a transmission resource for a target random access message, and the target random access message includes at least one of the first random access message and a second random access message.

According to a second aspect, a power control apparatus is provided. The apparatus includes:

a determining module, configured to, in a case that a terminal operates in a full duplex mode, determine a transmit power of a first random access message based on random access related information; where
the random access related information includes at least one of the following: a resource type of a first transmission resource, and resource location related information of the first transmission resource. The first transmission resource is a transmission resource for a target random access message, and the target random access message includes at least one of the first random access message and a second random access message.

According to a third aspect, a power control method is provided. The method includes:
transmitting, by a network-side device, a first power parameter, where the first power control parameter is used for transmitting a first random access message, the first power parameter includes a power parameter corresponding to at least one resource type, and the resource type is a resource type of a transmission resource for a random access message.

According to a fourth aspect, a power control apparatus is provided. The apparatus includes:
a transmitting module, configured to transmit a first power parameter, where the first power control parameter is used for transmitting a first random access message, the first power parameter includes a power parameter corresponding to at least one resource type, and the resource type is a resource type of a transmission resource for a random access message.

According to a fifth aspect, a terminal is provided. The terminal includes a processor and a memory, where the memory stores a program or an instruction capable of being run on the processor, and when the program or instruction is

executed by the processor, the steps of the method according to the first aspect are implemented.

According to a sixth aspect, a terminal is provided, including a processor and a communication interface, where the processor is configured to, in a case that a terminal operates in a full duplex mode, determine a transmit power of a first random access message based on random access related information. The random access related information includes at least one of the following: a resource type of a first transmission resource, and resource location related information of the first transmission resource. The first transmission resource is a transmission resource for a target random access message, and the target random access message includes at least one of the first random access message and a second random access message.

According to a seventh aspect, a network-side device is provided, where the network-side device includes a processor and a memory, the memory stores a program or an instruction capable of being run on the processor, and when the program or instruction is executed by the processor, the steps of the method according to the third aspect are implemented.

According to an eighth aspect, a network-side device is provided, including a processor and a communication interface, where the communication interface is configured to transmit a first power parameter, the first power control parameter is used for transmitting a first random access message, the first power parameter includes a power parameter corresponding to at least one resource type, and the resource type is a resource type of a transmission resource for a random access message.

According to a ninth aspect, a power control system is provided, including a terminal and a network-side device, where the terminal is configured to perform the steps of the power control method according to the first aspect, and the network-side device is configured to perform the steps of the power control method according to the third aspect.

According to a tenth aspect, a readable storage medium is provided, where a program or an instruction is stored on the readable storage medium, and when the program or instruction is executed by a processor, the steps of the method according to the first aspect are implemented, or the steps of the method according to the third aspect are implemented.

According to an eleventh aspect, a chip is provided. The chip includes a processor and a communication interface, the communication interface and the processor are coupled, the processor is configured to run a program or an instruction to implement the steps of the method according to the first aspect, or to implement the steps of the method according to the third aspect.

According to a twelfth aspect, a computer program/program product is provided. The computer program/program product is stored in a storage medium; the computer program/program product is executed by at least one processor to implement the steps of the method according to the first aspect, or to implement the steps of the method according to the third aspect.

In the embodiments of the present application, in a case that a terminal operates in a full duplex mode, the terminal determines a transmit power of a first random access message based on random access related information; where the random access related information includes at least one of the following: a resource type of a first transmission resource, and resource location related information of the first transmission resource. The first transmission resource is a transmission resource for a target random access message, and the target random access message includes at least one of the first random access message and a second random access message. That is, in the embodiments of the present application, in a case that a terminal operates in a full duplex mode, the transmit power of the first random access message is determined based on at least one of a resource type of a transmission resource for a target random access message and resource location related information, so that the transmit power of the random access message can better adapt to the transmission in the full duplex mode, thereby facilitating the guarantee of full duplex transmission performance.

## BRIEF DESCRIPTION OF DRAWINGS

FIG. 1 is a block diagram of a wireless communication system to which embodiments of the present application are applicable;

FIG. 2a is a schematic diagram of a flexible duplex mode according to an embodiment of the present application;

FIG. 2b is a schematic diagram of uplink transmission and downlink transmission in an SBFD mode according to an embodiment of the present application;

FIG. 3 is a flowchart of a power control method according to an embodiment of the present application;

FIG. 4 is a flowchart of another power control method according to an embodiment of the present application;

FIG. 5 is a structural diagram of a power control apparatus according to an embodiment of the present application;

FIG. 6 is a structural diagram of another power control apparatus according to an embodiment of the present application;

FIG. 7 is a structural diagram of a communication device according to an embodiment of the present application;

FIG. 8 is a structural diagram of a terminal according to an embodiment of the present application; and

FIG. 9 is a structural diagram of a network-side device according to an embodiment of the present application.

## DESCRIPTION OF EMBODIMENTS

The technical solutions in the embodiments of the present application will be clearly described below in conjunction with the drawings in the embodiments of the present application. Obviously, the described embodiments are part of the embodiments of the present application, not all of them. Based on the embodiments in the present application, all other embodiments obtained by those of ordinary skill in the art fall within the protection scope of the present application.

Terms such as "first" and "second" in the present application are used to distinguish similar objects and are not used to describe a specific order or sequence. It should be understood that terms used in this way can be interchanged where appropriate, so that the embodiments of the present application can be implemented in an order other than those illustrated or described herein, and objects distinguished by "first" and "second" are generally of one type and do not limit the number of objects, for example, there can be one or more first objects. In addition, "or" in the present application indicates at least one of the connected objects. For example, "A or B" covers three schemes: scheme one: including A but not B; scheme two: including B but not A; scheme three: including both A and B. The character "/" generally indicates an "or" relationship between the associated objects before and after.

The term "indication" in the present application can be a direct indication (or explicit indication) or an indirect indication (or implicit indication). The direct indication can be understood as the transmitter explicitly informing the receiver of specific information, operations to be performed, or request results in the transmitted indication; the indirect indication can be understood as the receiver determining corresponding information according to the indication transmitted by the transmitter, or performing judgment and determining operations to be performed or request results according to the judgment result.

It is worth pointing out that the technology described in the embodiments of the present application is not limited to the long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of the present application are often used interchangeably, and the technology described herein may be used in the systems and radio technologies as well as other systems and radio technologies. In the following descriptions, the new radio (New Radio, NR) system is described for an illustration purpose, and NR terms are used in most of the following description, but these technologies can also be applied to systems other than NR systems, such as the 6th Generation ($6^{th}$ Generation, 6G) communication system.

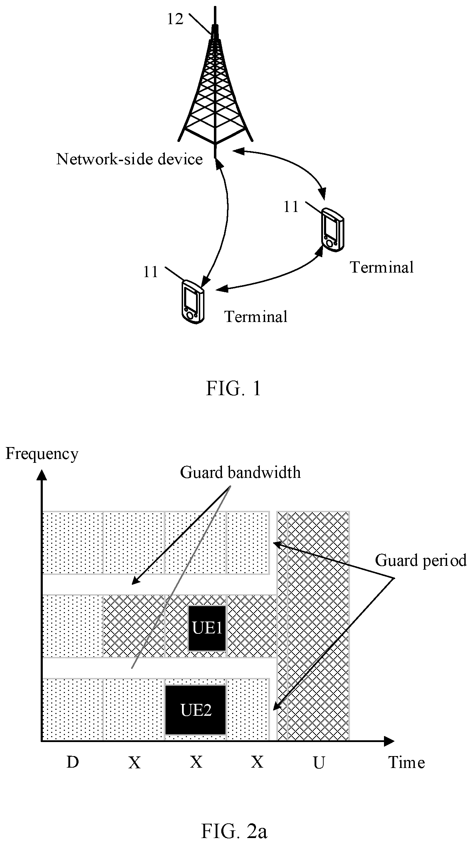

FIG. 1 is a block diagram of a wireless communication system to which the embodiments of the present application are applicable. The wireless communication system includes a terminal 11 and a network-side device 12. The terminal 11 can be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR), virtual reality (Virtual Reality, VR) device, a robot, a wearable device (Wearable Device), a flight vehicle (flight vehicle), vehicle user equipment (Vehicle User Equipment, VUE), a ship-borne device, a pedestrian user equipment (Pedestrian User Equipment, PUE), a smart home (home device with wireless communication function, such as a refrigerator, a television, a washing machine, or furniture), a game console, a personal computer (Personal Computer, PC), a teller machine, a self-service machine, or other terminal-side devices. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. The vehicle user equipment can also be called vehicle terminal, vehicle controller, vehicle module, vehicle component, vehicle chip, vehicle unit, or the like. It should be noted that the specific type of the terminal 11 is not limited in the embodiments of the present application. The network-side device 12 may include an access network device or a core network device, where the access network device may also be called a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, or the like. The base station may be called Node B (Node B, NB), evolved Node B (Evolved Node B, eNB), next generation Node B (the next generation Node B, gNB), new radio Node B (New Radio Node B, NR Node B), access point, relay base station (Relay Base Station, RBS), serving base station (Serving Base Station, SBS), base transceiver station (Base Transceiver Station, BTS), radio base station, radio transceiver, basic service set (Basic Service Set, BSS), extended service set (Extended Service Set, ESS), home Node B

(home Node B, HNB), home evolved Node B (home evolved Node B), transmission reception point (Transmission Reception Point, TRP), or some other suitable term in the field. As long as the same technical effect is achieved, the base station is not limited to specific technical vocabulary. It should be noted that in the embodiments of the present application, only the base station in the NR system is taken as an example for introduction, and the specific type of the base station is not limited.

The core network device may include but is not limited to at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF or L-NEF), binding support function (Binding Support Function, BSF), or application function (Application Function, AF). It should be noted that in the embodiments of the present application, only the core network device in the NR system is described as an example, and the specific type of the core network device is not limited.

For ease of understanding, some contents involved in the embodiments of the present application are explained below.

I. Subband full duplex (Subband Full Duplex) on base station side and half duplex on terminal side

When deploying a conventional cellular network, frequency division duplex (Frequency Division Duplex, FDD) or time division duplex (Time Division Duplex, TDD) may be adopted based on available spectrum and service characteristics. When FDD is used, uplink transmission and downlink transmission are located at different frequency points, and therefore do not interfere with each other and may be performed simultaneously. When TDD is used, uplink transmission and downlink transmission are located at the same frequency point and are performed alternately in a time division manner. The two duplex modes have their own advantages and disadvantages.

In order to more flexibly utilize limited spectrum resources, dynamically match service requirements, improve resource utilization efficiency, and enhance uplink coverage, latency, and other data transmission performance, a flexible duplex mode is proposed. One flexible duplex mode, namely non-overlapping sub-band full duplex (non-overlapping Sub-band Full Duplex, SBFD), operates as follows: full duplex on the network side, that is, at a same instant, uplink transmission and downlink transmission may be performed simultaneously at different frequency-domain locations. To avoid interference between uplink and downlink, a certain guard band (Guard Band) may be reserved between frequency-domain locations (corresponding to duplex subbands) corresponding to different transmission directions; and half duplex on the terminal side, which is consistent with TDD, that is, at a same instant, only uplink transmission or downlink transmission may be performed, and the two cannot be performed simultaneously. It can be understood that under this duplex mode, the uplink transmission and downlink transmission on the network side at the same moment can only be directed to different terminals.

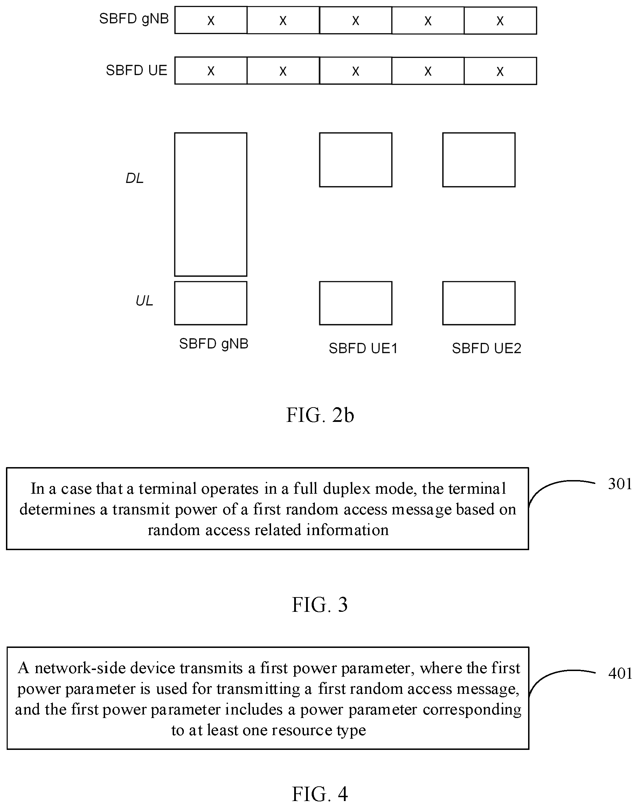

FIG. 2a is a schematic diagram of the above flexible duplex mode. On the network side, in a portion of the downlink symbols, the frequency-domain of a single carrier is semi-statically divided into three duplex subbands, where duplex subbands at two sides of the carrier are downlink duplex subbands, and a central portion is an uplink duplex subband, to reduce interference to adjacent carriers. In the third time slot, UE1 and UE2 perform uplink transmission and downlink reception respectively. In this case, the terminal operates in half duplex mode. FIG. 2b shows a schematic diagram of uplink transmission and downlink transmission in SBFD mode. As shown in FIG. 2b, when a terminal operates in full duplex mode, while receiving downlink transmission transmitted by a base station, the terminal may suffer interference from signals of uplink transmissions performed by the terminal itself, and may also cause sidelink interference to downlink transmission of other terminals.

II. Random access procedure

In the related art, a random access procedure may be a contention-based random access procedure or a contention-free random access procedure. The random access procedure may be a four-step random access procedure (also referred to as a Type-1 random access procedure) or a two-step random access procedure (also referred to as a Type-2 random access procedure).

In the contention-based 4-step random access channel (Random Access Channel, RACH) procedure, the UE first transmits Msg1 including a preamble (preamble) to a network. After detecting the preamble, the network transmits a Msg2/random access response (Random Access Response, RAR) message including an index of the preamble detected by the network and an uplink radio resource allocated to the UE for transmitting Msg3. After receiving the Msg2, the UE determines that at least one of the indexes of preambles carried in Msg2 is consistent with an index of the preamble

transmitted by itself, and then transmits a Msg3 containing contention resolution information based on the resource indicated by the RAR. After receiving the Msg3, the network transmits a Msg4 containing contention resolution information. The UE receives the Msg4 and determines that the resolution information is consistent with that transmitted by itself in Msg3, thereby completing the 4-step random access.

The network adds uplink grant (UL grant) information to the RAR to indicate scheduling information for Msg3 physical uplink shared channel (Physical Uplink Shared Channel, PUSCH), and adds information such as RACH preamble identifier (RACH preamble ID, RAPID), temporary cell radio network temporary identity (Temporary Cell Radio Network Temporary Identity, TC-RNTI), and time advance (Time Advanced, TA). If the network receives no Msg3 PUSCH, retransmission of Msg3 PUSCH may be scheduled on a physical downlink control channel (Physical Downlink Control Channel, PDCCH) scrambled by TC-RNTI.

For the contention-based random access procedure, different UEs randomly select preambles for transmission; as a result, different UEs may select a same preamble for transmission on a same time-frequency radio resource (random access occasion (RACH Occasion, RO) resource). Such case may be understood as a preamble collision between UEs. In this case, different UEs may receive a same RAR, and then different UEs may transmit Msg3 PUSCHs based on the scheduling information in the RAR UL grant. Since the related art does not support repeated transmission of Msg3 PUSCH, the network can only decode PUSCH (containing contention resolution information) transmitted only by one UE on one Msg3 PUSCH scheduling resource, so the network may add, to a Msg4, the contention resolution information received in Msg3. If the contention resolution information in the Msg4 received by the UE matches the contention resolution information transmitted by the UE in Msg3 PUSCH, the UE considers the contention resolution successful. If it is not matched, the contention resolution is considered unsuccessful.

If the contention resolution is unsuccessful, the UE reselects a RACH transmission resource for physical random access channel (Physical Random Access Channel, PRACH) transmission, to perform a next random access attempt.

In NR Rel-16, a two-step random access procedure 2-step RACH is introduced. The first step is that the UE transmits a MsgA to the network side. After receiving the MsgA, the network side transmits a MsgB message to the UE. If the UE does not receive the MsgB within a specific period of time, the UE increments a counter for counting the number of MsgA transmissions by 1 and transmits a MsgA again. If the counter for counting the number of MsgA transmissions reaches a specific threshold, the UE switches from the 2-step random access procedure to the 4-step random access procedure. The MsgA includes a MsgA preamble part and a MsgA PUSCH part. The preamble part is transmitted on an RO for the 2-step RACH, and the PUSCH part is transmitted on a MsgA PUSCH resource associated with MsgA preamble transmission and RO. The MsgA PUSCH resource is a set of PUSCH resources configured for each PRACH slot (slot), including a time-frequency resource and a demodulation reference signal (Demodulation Reference Signal, DMRS) resource, where the RO indicates a physical random access channel transmission occasion (PRACH transmission occasion).

III. Uplink Power Control

In the NR system design, the introduction of new features in the uplink is considered, such as uplink transmission based on orthogonal frequency division multiplexing (Orthogonal Frequency Division Multiplexing, OFDM) and single-symbol uplink control channel. Uplink power control is also an important aspect, including the following considerations:

absence of a cell-specific reference signal for path loss estimation, similar to that in LTE;
beam-based transmission/reception;
analog beamforming at gNB/UE;
multi-beam/multi-stream transmission;
multiple numerologies;
information exchange among TRPs; and
path-loss compensation.

According to the uplink power control in the current LTE system, two path-loss compensation schemes are considered; one is full path-loss compensation, and the other is partial path-loss compensation. In the NR system, it may be considered that the UE measures the reference signal received power (Reference Signal Received Power, RSRP) by using a specific type of RS, and derives the path loss between the UE and its associated gNB by using the RSRP.

By taking the estimated path loss into account, the uplink transmit power from the UE may be fully or partially compensated. First, full path-loss compensation can maximize fairness for cell-edge UEs. In other words, the received power at the gNB side from a cell-edge UE will be comparable to the power received from a cell-center UE. In contrast, if partial path-loss compensation is used, the received power at the gNB side from a cell-center UE will be much higher than the received power from a cell-edge UE. The path loss of a cell-edge UE may be compensated by adjusting other power parameters or offsets, so that the received power from the cell-edge UE may be appropriately controlled, while the

received power from the cell-center UE may be redundant due to sufficient receiving power.

In the case of uplink data channel transmission, such redundant power may be used to improve spectral efficiency by applying a higher modulation and coding scheme (Modulation and Coding Scheme, MCS) level. For example, a cell-center UE may use fewer physical resource blocks (Physical Resource Block, PRB) for a same transport block (Transport Block, TB) size. However, in the case of uplink control channel transmission using a fixed amount of resources, it is unclear how redundant power may be used to improve spectral efficiency, because the uplink control information (Uplink Control Information, UCI) size does not depend on the UE location or channel conditions. Therefore, full compensation may be preferable for uplink control channel power control.

In addition, in the case of partial path-loss compensation for uplink data channel transmission, a value of a partial path-loss compensation factor may be used to adjust a received power difference between cell-center UEs and cell-edge UEs, and this value may vary depending on a cell radius and target performance.

IV. Transmit power control (Transmit Power Control, TPC) command (that is, TPC command)

A TPC command may be used to compensate for channel variations caused by fast fading. Regarding current LTE, the power of a physical uplink control channel (Physical Uplink Control Channel, PUCCH) may be adjusted by a TPC command signaled in downlink control information (Downlink Control Information, DCI) for downlink assignment, while the power of a PUSCH (or SRS) may be adjusted by a TPC command signaled in uplink grant DCI. In addition, for uplink transmissions without related DCI, such as semi-persistent scheduling (Semi-Persistent Scheduling, SPS), periodic channel state information (Channel State Information, CSI) or SRS, TPC commands may be signaled to a specific UE group (UE group) by using DCI format 3/3A. There are two types of TPC procedures for updating uplink transmit power: accumulative (accumulative) TPC and absolute (absolute) TPC. Accumulative TPC is very suitable for fine-tuning the UE transmit power by using relatively small step sizes of TPC values. In contrast, absolute TPC may be used to immediately increase the UE transmit power by using relatively large step sizes of TPC values.

V. Additional Functions of Power Control in NR

In the NR design, it is necessary to consider deployments based on analog (or hybrid) beamforming, especially for high frequency bands (for example, above 6 GHz). With such analog beamforming, gNB TX/RX beam sweeping (for example, time division multiplexing (Time Division Multiplexing, TDM) among different gNB TX/RX beams) may be required, not only for transmitting downlink common signals and information, such as synchronization signals (for example, primary synchronization signal (Primary Synchronization Signal, PSS)/secondary synchronization signal (Secondary Synchronization Signal, SSS) in LTE) or broadcast system information (for example, physical broadcast channel (Physical Broadcast Channel, PBCH) in LTE), but also for transmitting uplink and downlink control and data channels to serve UEs located in different areas (or beam directions). In this case, it may be necessary to consider differentiation of power control parameters among different beams of the UE, because the power required for UE performance may vary for each beam of the UE.

Generally, an amount of information transmitted through the uplink data channel is much larger than that transmitted through the uplink control channel. Therefore, the power required for uplink data channel transmission is also be greater than that for the uplink control channel. In NR design, TDM is considered for the multiplexing structure between uplink data and control channels to reduce latency, flexible uplink and downlink configuration, and analog beamforming. In a case that uplink data and control channels are multiplexed in a TDM manner, it is necessary to handle the power imbalance between the two different channels, which may be more significant than in LTE. In addition, considering various OFDM numerologies for NR (for example, different subcarrier spacings or symbol durations), it is also necessary to handle the power transient periods between uplink data and control channels for certain numerologies (for example, large subcarrier spacing).

VI. Per TRP and per layer power control

For high frequency bands in NR, the number of main rays per TRP or single panel may be limited. To achieve high single-user multiple-input multiple-output (Single-User Multiple-Input Multiple-Output, SU MIMO) spectral efficiency, it is necessary to thoroughly study coordinated transmission schemes across multiple TRPs in NR, including coordinated multi-point (Coordinated Multi-point, CoMP) dynamic point selection (Dynamic Point Selection, DPS) and joint transmission (Joint Transmission, JT) for independent layers. When the DCI related to downlink transmission indicates a transmission rank and an applied coordination scheme, whenever analog beamforming is applied at a given time instance, the DCI decoding latency on the UE side may be a major issue. This is because the DCI transmission may be performed by the serving TRP, but as an example, the actual data transmission may be performed by another TRP.

In the case of independent layer JT, where specific layers can be transmitted from different TRPs, the uplink

transmit power corresponding to each layer group may need to be configured and controlled by the gNB, because at least the path losses from different TRPs may be different. In addition, separate uplink power control processes for different TRPs need to be further studied in the context of uplink CoMP.

VII. Preamble target received power

The preamble target received power (PREAMBLE_RECEIVED_TARGET_POWER) is calculated according to the following formula:

preambleReceivedTargetPower + DELTA_PREAMBLE + (PREAMBLE_POWER_RAMPING_COUNTER - 1) × PREAMBLE_POWER_RAMPING_STEP

where preambleReceivedTargetPower is an initial power at which the gNB expects to receive the preamble; DELTA_PREAMBLE is related to a preamble format (preamble format); PREAMBLE_POWER_RAMPING_STEP is a transmit power increment for a next access attempt after each access failure; and PREAMBLE_POWER_RAMPING_COUNTER is the number of transmit power ramping attempts.

The calculation formula for the actual transmit power of the preamble is as follows:

$$P_{\mathrm{PRACH}b,f,c}(i)=\min\left\{P_{\mathrm{CMAX}f,c}(i),P_{\mathrm{PRACHtarget}f,c}+PL_{b,f,c}\right\}$$

where $P_{\mathrm{CMAX},f,c}(i)$ is a maximum transmit power configured for UE on carrier f of serving cell C at transmission occasion i (the UE transmit maximum power is 23 dBm); $P_{\mathrm{PRACH,\ target,}\ f,c}$ is a PRACH target received power PREAMBLE_RECEIVED_TARGET_POWER on an active UL BWP b of carrier f on serving cell C; $PL_{b,f,c}$ is a path loss of the active UL BWP b of carrier f of the DL RS associated with the PRACH transmission on the active DL BWP of serving cell C, and $PL_{b,f,c}$ equals referenceSignalPower (in dB) minus higher layer filtered RSRP (in dBm, RRC filtered).

If $PL_{b,f,c}$ is determined based on a DL BWP that is an initial DL BWP, and multiplexing pattern 2 or 3 is configured for synchronization signal block (Synchronisation Signal Block, SSB) and control resource set (Control Resource Set, CORESET), the UE determines $PL_{b,f,c}$ based on an SSB associated with the PRACH transmission.

VIII. PRACH Power Control

The initial transmit power of the UE is first related to two factors: an initial received power (sensitivity) expected by the base station and a path loss (Path Loss) between the base station and the UE. The base station informs the UE in advance of the initial received power (in LTE, a preamble Initial Received Target Power parameter; in NR, a preamble Received Target Power parameter) and a reference signal transmit power (in LTE, a reference signal power parameter; in NR, an ss PBCH-Block Power (SSB) parameter and power Control Offset SS (for CSI-RS) parameter). By combining an actual measured reference signal received power, the UE can calculate the path loss (reference signal transmit power - reference signal received power) and the initial transmit power (base station initial received power + path loss).

In NR, since the cell reference signal (Cell Reference Signal, CRS) is eliminated to reduce always-on (always-on) signal overhead, the reference signal measured by the UE is SSB or channel-state information reference signal (Channel-State information reference signal, CSI-RS). In LTE, the path loss is denoted as $PL_c$, and in NR, due to the introduction of the concept of bandwidth part (Bandwidth Part, BWP), the path loss is denoted as $PL_{b,f,c}$, where b represents BWP, f represents carrier, and c represents cell.

In NR, a power ramping mechanism for Msg1 is similar to that in LTE, but with slightly difference. In NR, a PRACH (Occasion) for UE transmitting Msg1 is associated with an SSB beam. When the UE reselects RA resources, if the UE selects a same SSB beam or CSI-RS beam (and does not receive a lower-layer indication to suspend power ramping), retransmission of Msg1 triggers transmit power ramping; and if the UE selects a different SSB beam or CSI-RS beam, the transmit power is not ramped up.

A preamble signal configuration of PRACH includes $p_{PRACH,target}$, which functions the same as $p_0$, and $\alpha$ is fixed at 1. If no RAR is received in response to the configured PRACH transmission, the UE performs power ramping (power ramping) until the power reaches $P_{CMAX}$ or a corresponding RAR is received.

The following describes in detail the power control method provided in the embodiments of the present application through some embodiments and application scenarios thereof with reference to the accompanying drawings.

Referring to FIG. 3, FIG. 3 is a flowchart of a power control method according to an embodiment of the present application. The method may be executed by a terminal. As shown in FIG. 3, it includes the following step:

step 301: In a case that a terminal operates in a full duplex mode, the terminal determines a transmit power of a first

random access message based on random access related information; where
the random access related information includes at least one of the following: a resource type of a first transmission resource, and resource location related information of the first transmission resource. The first transmission resource is a transmission resource for a target random access message, and the target random access message includes at least one of the first random access message and a second random access message.

In this embodiment, the first random access message may be any random access message, where the random access message may include, but is not limited to, at least one of the following: Msg1, Msg3, MsgA, common PUCCH (Common PUCCH), Msg5, and SRS.

The second random access message may also be any random access message. In some optional embodiments, the second random access message may be a random access message related to the first random access message in the random access procedure initiated by the terminal. By way of example, the second random access message may be a random access message corresponding to the first random access message in the random access procedure initiated by the terminal. For example, the second random access message is Msg1, and the first random access message is Msg3; or, the second random access message may be a random access message transmitted before the first random access message in the random access procedure initiated by the terminal. For example, the first random access message is Msg5, and the second random access message is Msg1 or Msg3, where the Msg5 may refer to the PUSCH for uplink transmission after Msg4.

The first transmission resource is a transmission resource for the target random access message. For example, if the target random access message is the first random access message, the first transmission resource is the transmission resource for the first random access message; if the target random access message is the second random access message, the first transmission resource is the transmission resource for the second random access message; if the target random access message includes the first random access message and the second random access message, the first transmission resource includes the transmission resource for the first random access message and the transmission resource for the second random access message. By way of example, the first transmission resource may include, but is not limited to, at least one of the following: an RO resource, a Msg3 PUSCH resource, a MsgA PUSCH resource, a common PUCCH resource, a Msg5 PUSCH resource, a PRACH resource, a MsgA PRACH resource, and an SRS resource.

The resource type of the first transmission resource may be determined based on at least one of time-domain resource information of the first transmission resource and frequency-domain resource information of the first transmission resource. By way of example, the resource type of the first transmission resource may be determined based on at least one of the time-domain format of the time-domain resource in which the first transmission resource is located and the relationship between the time-domain resource of the first transmission resource and the time-domain resource in which the target signal is located. For example, in a case that the time-domain format of the time-domain resource in which the first transmission resource is located is a first time-domain format, the resource type of the first transmission resource is determined as type a1; in a case that the time-domain format of the time-domain resource in which the first transmission resource is located is a second time-domain format and does not include the target signal, the resource type of the first transmission resource is determined as type a2; or, the resource type of the first transmission resource may be determined based on a size of a frequency gap between the frequency-domain resource of the first transmission resource and the DL transmission resource. For example, in a case that the frequency gap between the frequency-domain resource of the first transmission resource and the DL transmission resource is greater than a first threshold, the resource type of the first transmission resource is determined as type a3; and in a case that the frequency gap between the frequency-domain resource of the first transmission resource and the DL transmission resource is less than or equal to the first threshold, the resource type of the first transmission resource is determined as type a4. The first time-domain format is a time-domain format for uplink-only transmission, the second time-domain format is a time-domain format for full duplex transmission, and the target signal includes a downlink common signal or a downlink broadcast signal.

The resource location related information of the first transmission resource may include at least one of time-domain resource location related information and frequency-domain resource location related information of the first transmission resource. By way of example, the resource location related information of the first transmission resource may include at least one of the following: a frequency-domain location of RO, a time-domain location of RO, a time-domain location of MsgA PUSCH Occasion, a frequency-domain location of MsgA PUSCH Occasion, a frequency-domain location of Msg3 PUSCH, a frequency-domain location of Common PUCCH, a frequency-domain location of Msg5 PUSCH, and a frequency-domain location of SRS.

It should be noted that corresponding to the type of the target random access message, the random access related information may include, but is not limited to, at least one of the following: RACH configuration related information, MsgA PUSCH related information, Msg3 PUSCH related information, Common PUCCH related information, Msg5 related information, and SRS related information. For example, if the target random access message is MsgA, the random access related information may include MsgA PUSCH related information, and the MsgA PUSCH related information may include at least one of the resource type and resource location related information of the transmission resource for MsgA PUSCH;

and if the target random access message is Msg3, the random access related information may include Msg3 related information, and the Msg3 related information may include at least one of the resource type and resource location related information of the transmission resource for Msg3.

In one implementation, the terminal determines the transmit power of the first random access message based on the resource type of the first transmission resource. By way of example, different resource types may correspond to different power parameters. For example, power parameters corresponding to different resource types may be agreed by the protocol, or power parameters corresponding to different resource types may be configured by a network-side device, or the terminal may determine power parameters corresponding to different resource types based on different resource types. In this way, the terminal may determine the power parameter corresponding to the resource type of the first transmission resource based on the resource type of the first transmission resource, and then determine the transmit power of the first random access message based on the power parameter corresponding to the resource type of the first transmission resource. This facilitates ensuring the transmission performance of the random access message while reducing the interference of the random access message transmission on downlink transmission when the terminal operates in the full duplex mode. The power parameters may include, but are not limited to, at least one of power offset value, power compensation factor, target received power, and power ramping parameter.

For example, if the resource type of the transmission resource for the random access message includes type a1 and type a2, and type a1 corresponds to a first power parameter, and type a2 corresponds to a second power parameter, then in a case that the terminal determines that the resource type of the first transmission resource is type a1, the transmit power of the first random access message may be determined based on the first power parameter; and in a case that it is determined that the resource type of the first transmission resource is type a2, the transmit power of the first random access message may be determined based on the second power parameter.

In another implementation, the terminal determines the transmit power of the first random access message based on the resource location related information of the first transmission resource. By way of example, different location relationships between a resource location of a transmission resource for a random access message and a resource location of a downlink transmission resource may correspond to different power parameters. For example, power parameters corresponding to different location relationships between the resource location of the transmission resource for the random access message and the resource location of the downlink transmission resource may be agreed by a protocol, or a network-side device configures power parameters corresponding to different location relationships between the resource location of the transmission resource for the random access message and the resource location of the downlink transmission resource, or the terminal may determine the power parameter corresponding to the resource location of the transmission resource for the random access message based on the location relationship between the resource location of the transmission resource for the random access message and the resource location of the downlink transmission resource. Accordingly, the terminal may determine, based on the location relationship between the resource location of the first transmission resource and the resource location of the downlink transmission resource, a power parameter corresponding to a location relationship between a resource location of a first transmission resource and a resource location of a downlink transmission resource, and then determine a transmit power of the first random access message based on the power parameter corresponding to the location relationship between the resource location of the first transmission resource and the resource location of the downlink transmission resource. In this manner, when the terminal operates in the full duplex mode, the transmission performance of the random access message can be ensured while reducing the interference of the random access message transmission on downlink transmission.

For example, if a frequency gap between a resource location of a transmission resource for a random access message and a DL transmission resource is greater than a first threshold, a third power parameter is applied; and if the frequency gap between the resource location of the transmission resource for the random access message and the DL transmission resource is less than or equal to the first threshold, a fourth power parameter is applied. Accordingly, in a case of determining that a frequency gap between a frequency-domain resource of a first transmission resource and the DL transmission resource is greater than the first threshold, the terminal may determine a transmit power of a first random access message based on the third power parameter; and in a case of determining that the frequency gap between the frequency-domain resource of the first transmission resource and the DL transmission resource is less than or equal to the first threshold, the terminal may determine the transmit power of the first random access message based on the fourth power parameter.

In yet another implementation, the terminal determines the transmit power of the first random access message based on a resource type of the first transmission resource and resource location related information of the first transmission resource. For example, in a case of determining that the resource type of the first transmission resource is type a1, the terminal may determine the transmit power of the first random access message based on a fifth power parameter; in a case of determining that the resource type of the first transmission resource is type a2 and the frequency gap between the frequency-domain resource of the first transmission resource and the DL transmission resource is greater than or equal to the first threshold, the terminal may determine the transmit power of the first random access message based on a sixth power parameter; and in a case of determining that the resource type of the first transmission

resource is type a2 and the frequency gap between the frequency-domain resource of the first transmission resource and the DL transmission resource is less than the first threshold, the terminal may determine the transmit power of the first random access message based on a seventh power parameter. In this manner, when the terminal operates in the full duplex mode, the transmission performance of the random access message can be ensured while reducing the interference of the random access message transmission on downlink transmission.

It can be understood that after determining the transmit power of the first random access message, the terminal may transmit the first random access message based on the transmit power of the first random access message.

In the embodiments of the present application, in a case that a terminal operates in a full duplex mode, the terminal determines a transmit power of a first random access message based on random access related information; where the random access related information includes at least one of the following: a resource type of a first transmission resource, and resource location related information of the first transmission resource. The first transmission resource is a transmission resource for a target random access message, and the target random access message includes at least one of the first random access message and a second random access message. That is, in the embodiments of the present application, in a case that a terminal operates in a full duplex mode, the transmit power of the first random access message is determined based on at least one of a resource type of a transmission resource for a target random access message and resource location related information, so that the transmit power of the random access message can better adapt to the transmission in the full duplex mode, thereby facilitating the guarantee of full duplex transmission performance.

Optionally, the resource type of the first transmission resource is determined based on at least one of the following: a time-domain format of a time-domain resource in which the target random access message is located, and a relationship between the time-domain resource in which the target random access message is located and a time-domain resource in which a target signal is located; where the target signal includes a downlink common signal or a downlink broadcast signal.

In this embodiment, the time-domain format may include at least one of a first time-domain format, a second time-domain format, and a third time-domain format. The first time-domain format is a time-domain format for uplink (UL)-only transmission, that is, a transmission direction of a time-domain resource of the first time-domain format is uplink only. The second time-domain format is a time-domain format for full duplex transmission. For example, the second time-domain format is a time-domain format for subband (subband) full duplex transmission, that is, a transmission direction of a time-domain resource of the second time-domain format includes uplink transmission and downlink transmission. For example, a DL subband and a UL subband respectively include DL transmission and UL transmission. The third time-domain format is a time-domain format for downlink (DL)-only transmission, that is, a transmission direction of a time-domain resource of the third time-domain format is downlink only.

It should be noted that the first time-domain format may also be referred to as a UL time-domain format, the second time-domain format may also be referred to as an X time-domain format, and the third time-domain format may also be referred to as a DL time-domain format.

The relationship between a time-domain resource in which the target random access message is located and the time-domain resource in which the target signal is located may include, for example, whether the time-domain resource in which the target random access message is located overlaps with the time-domain resource in which the target signal is located. It should be noted that the overlap between the time-domain resource in which the target random access message is located and the time-domain resource in which the target signal is located may also be described as that the time-domain resource in which the target random access message is located includes the target signal, and the non-overlap between the time-domain resource in which the target random access message is located and the time-domain resource in which the target signal is located may also be described as that the time-domain resource in which the target random access message is located does not include the target signal.

In one implementation, a type of a transmission resource for a random access message may be determined based on a time-domain format of a time-domain resource in which the random access message is located. For example, in a case that the time-domain format of the time-domain resource in which the target random access message is located is the first time-domain format, the resource type of the first transmission resource is determined as type b1; and in a case that the time-domain format of the time-domain resource in which the target random access message is located is the second time-domain format, the resource type of the first transmission resource is determined as type b2.

In another implementation, the type of the transmission resource for the random access message may be determined based on the relationship between the time-domain resource in which the random access message is located and the time-domain resource in which the target signal is located. For example, in a case that the time-domain resource in which the target random access message is located overlaps with the time-domain resource in which the target signal is located, the resource type of the first transmission resource is determined as type b3. In a case that the time-domain resource in which the target random access message is located does not overlap with the time-domain resource in which the target signal is located, the resource type of the first transmission resource is determined as type b4.

In yet another implementation, the type of the transmission resource for the random access message may be determined based on the time-domain format of the time-domain resource in which the random access message is located

and the relationship between the time-domain resource in which the random access message is located and the time-domain resource in which the target signal is located. For example, in a case that the time-domain format of the time-domain resource in which the target random access message is located is the first time-domain format, the resource type of the first transmission resource is determined as type b5; and in a case that the time-domain format of the time-domain resource in which the target random access message is located is the second time-domain format and the time-domain resource in which the target random access message is located does not overlap with the time-domain resource in which the target signal is located, the resource type of the first transmission resource is determined as type b6; in a case that the time-domain format of the time-domain resource in which the target random access message is located is the second time-domain format and the time-domain resource in which the target random access message is located overlaps with the time-domain resource in which the target signal is located, determining the resource type of the first transmission resource as type b7.

Optionally, the resource type includes at least one of the following:

a first type, where the first type is used to indicate a transmission resource for a random access message, the random access message being located on a time-domain resource of a first time-domain format;
a second type, where the second type is used to indicate a transmission resource for a random access message, the random access message being located on a time-domain resource of a second time-domain format and without a target signal;
a third type, where the third type is used to indicate a transmission resource for a random access message, the random access message being located on a time-domain resource of a second time-domain format and with a target signal; and
a fourth type, where the fourth type is used to indicate a transmission resource for a random access message, the random access message being located on a target time-domain resource, a time interval between the target time-domain resource and a synchronization signal block SSB is greater than or equal to a preset value, and the target time-domain resource contains a target signal; where
the first time-domain format is a time-domain format for uplink-only transmission, the second time-domain format is a time-domain format for full duplex transmission, and the target signal includes a downlink common signal or a downlink broadcast signal.

In this embodiment, the resource type of the transmission resource for the random access message may include at least one of the first type, the second type, the third type, and the fourth type. The transmission resource for the random access message can be understood as the transmission resource for the random access message. The first time-domain format and second time-domain format have been described in the foregoing and will not be repeated here. The target signal includes a downlink common signal or a downlink broadcast signal, for example, an SSB, a system information block (System Information Block, SIB), a master information block (Master Information Block, MIB), or paging (Paging). The preset value may be agreed by a protocol or configured by a network-side device or determined by the terminal. By way of example, the target time-domain resource may include a group of time-domain symbols (symbol).

Specifically, for the resource type of the first transmission resource, in a case that the first transmission resource is located on a time-domain resource of the second time-domain format and without the target signal, the resource type of the first transmission resource is determined as the first type; in a case that the first transmission resource is located on a time-domain resource of the second time-domain format and without the target signal, the resource type of the first transmission resource is determined as the second type; in a case that the first transmission resource is located on a time-domain resource of the second time-domain format and with the target signal, the resource type of the first transmission resource is determined as the third type; and in a case that the first transmission resource is located on the target time-domain resource, the resource type of the first transmission resource is determined as the fourth type.

It should be noted that the first type may also be referred to as type 1, the second type may also be referred to as type 2, the third type may also be referred to as type 3, and the fourth type may also be referred to as type 4.

Optionally, the resource location related information of the first transmission resource includes at least one of time-domain location related information of the first transmission resource and frequency-domain location related information of the first transmission resource.

In some optional embodiments, in a case that the first transmission resource is located on a time-domain resource of the second time-domain format, the terminal determines the transmit power of the first random access message based on at least one of the time-domain location related information of the first transmission resource and frequency-domain location related information of the first transmission resource. For example, in a case that the resource type of the first transmission resource is the second type or third type, the terminal determines the transmit power of the first random access message based on at least one of the time-domain location related information of the first transmission resource and frequency-domain location related information of the first transmission resource.

Optionally, the frequency-domain location related information of the first transmission resource includes at least

one of the following: a location of a frequency-domain resource of the first transmission resource, and a frequency gap between a frequency-domain resource of the first transmission resource and a downlink transmission resource.

By way of example, the downlink transmission resource may be referred to as a DL subband or a frequency-domain resource of a target signal (for example, SSB, SIB, MIB, or Paging).

By way of example, for a case in which a frequency gap between a frequency-domain location of a transmission resource for a random access message and a frequency-domain location of a DL transmission resource is greater than the first threshold, and a case in which the frequency gap between the frequency-domain location of the transmission resource for the random access message and the frequency-domain location of the DL transmission resource is less than or equal to the first threshold, different transmit powers may be used to transmit the random access message respectively.

Optionally, the downlink transmission resource includes at least one of the following:
a downlink subband (DL subband), a frequency-domain resource of downlink common signal, and a frequency-domain resource of downlink broadcast signal.

Optionally, the first transmission resource is located on a time-domain resource of the second time-domain format, and the second time-domain format is a time-domain format for full duplex transmission.

In this embodiment, in a case that the first transmission resource is located on a time-domain resource of the second time-domain format, the terminal may determine the transmit power of the first random access message based on the frequency-domain location related information of the first transmission resource.

Optionally, the method further includes:

receiving, by the terminal, a first power parameter, where the first power control parameter is used for transmitting the first random access message, the first power parameter includes a power parameter corresponding to at least one resource type, and the resource type is a resource type of a transmission resource for a random access message; where

the determining, by the terminal, a transmit power of a first random access message based on random access related information includes:

determining, by the terminal, a transmit power of a first random access message based on random access related information and the first power parameter.

By way of example, the resource type may include, but is not limited to, at least one of the first type, the second type, the third type, and the fourth type. The power parameters may include at least one of a power offset value, a power compensation factor, a target received power, and a power ramping parameter.

By way of example, the network-side device may configure power parameters corresponding to various resource types, that is, the first power parameter includes power parameters corresponding to various resource types. Taking the resource types including the first type, the second type, and the third type as an example, the network-side device may configure power parameters corresponding to the first type, power parameters corresponding to the second type, and power parameters corresponding to the third type respectively, and transmit them to the terminal. Accordingly, in a case that the terminal determines the resource type of the first transmission resource based on the random access related information, the terminal determines, based on the resource type of the first transmission resource and the power parameters corresponding to various resource types configured by the network-side device, a power parameter corresponding to the resource type of the first transmission resource, and then may determine the transmit power of the first random access message based on the power parameter corresponding to the resource type of the first transmission resource.

For example, if the network-side device configures a power offset value a1 corresponding to the first type, a power offset value a2 corresponding to the second type, and a power offset value a3 corresponding to the third type, in a case of determining that the resource type of the first transmission resource is the first type based on the random access related information, the terminal determines the transmit power of the first random access message based on the power offset value a1; in a case of determining that the resource type of the first transmission resource is the second type based on the random access related information, the terminal determines the transmit power of the first random access message based on the power offset value a2; in a case of determining that the resource type of the first transmission resource is the third type based on the random access related information, the terminal determines the transmit power of the first random access message is determined based on the power offset value a3.

Optionally, in a case that the first random access message is Msg1 or MsgA physical random access channel PRACH, the power parameter includes at least one of the following: a target received power corresponding to Msg1 or MsgA PRACH, a power offset value corresponding to Msg1 or MsgA PRACH, a power ramping parameter corresponding to Msg1 or MsgA PRACH, and a maximum transmit power corresponding to Msg1 or MsgA PRACH;
or,

in a case that the first random access message is Msg3, the power parameter includes at least one of the following: a

power offset value corresponding to Msg3, and a power compensation factor corresponding to Msg3;
or,
in a case that the first random access message is MsgA physical uplink shared channel PUSCH, the power parameter includes at least one of the following: a power offset value corresponding to MsgA PUSCH, and a power compensation factor corresponding to MsgA PUSCH;
or,
in a case that the first random access message is a common physical uplink control channel PUCCH, the power parameter includes at least one of the following: a power offset value corresponding to common PUCCH, and a power compensation factor corresponding to common PUCCH;
or,
in a case that the first random access message is Msg5 PUSCH, the power parameter includes at least one of the following: a power offset value corresponding to Msg5 PUSCH, a power compensation factor corresponding to Msg5 PUSCH, and a target received power corresponding to Msg5 PUSCH;
or,
in a case that the first random access message is a sounding reference signal SRS, the power parameter includes at least one of the following: a power offset value corresponding to SRS, a power compensation factor corresponding to SRS, and a target received power corresponding to SRS.

In this embodiment, the power offset value may be a positive value or a negative value. The power ramping parameter (power ramping) may include, but is not limited to, at least one of a power ramping step size, a power ramping counter, and a maximum number of power ramping attempts.

By way of example, the power offset value corresponding to the Msg3 may include at least one of the following: a power offset value of Msg3 configured with the transmit power of PRACH transmitted in the half duplex mode as a reference value, a power offset value of Msg3 configured with the transmit power of PRACH transmitted in the full duplex mode as a reference value. The power offset value of Msg3 configured with the transmit power of PRACH transmitted in the full duplex mode as a reference value may also be referred to as a power offset value of Msg3 configured for enhanced duplex mode (enhanced duplex mode), for example, Msg3-DeltaPreambleXdd.

By way of example, the power offset value corresponding to the above MsgA PUSCH may include at least one of the following: a power offset value of MsgA PUSCH configured with the transmit power of PRACH transmitted in the half duplex mode as a reference value and a power offset value of MsgA PUSCH configured with the transmit power of PRACH transmitted in the full duplex mode as a reference value. The power offset value of MsgA PUSCH configured with the transmit power of PRACH transmitted in the full duplex mode as a reference value may also be referred to as a power offset value of MsgA PUSCH configured for enhanced duplex mode (enhanced duplex mode), for example, MsgA-DeltaPreambleXdd.

By way of example, the Xdd represents a certain slot type, time-domain format, or time-domain type. Specifically, it may be indicated through full duplex subband configuration or full duplex subband. By way of example, specifically, it may include:

a time-domain format indicated by TDD-UL-DL-Configuration, for example, DL, UL, flexible (Flexible);
a time-domain type indicated by xdd-UL-DL-Configuration, for example, Full DL, Full UL, SBFD X; and
a frequency format (Frequency format) indicated by full duplex subband configuration, for example, DL subband, UL subband, Guard band, DL BWP, UL BWP.

For the target received power corresponding to the Msg5 PUSCH, by way of example, the power parameter may directly include the target received power corresponding to the Msg5 PUSCH, or may include a parameter used to calculate the target received power corresponding to the Msg5 PUSCH, for example, at least one of a $P_{O_NOMINAL,PUSCH,f,c}$ value corresponding to Msg5 PUSCH and a $P_{O_UE_PUSCH,b,f,c}$ value corresponding to Msg5 PUSCH, where $P_{O_NOMINAL,PUSCH,f,c}$ represents the first part of the target received power of PUSCH, $P_{O_UE_PUSCH,b,f,c}$ represents the second part of the target received power of PUSCH, and the first part and second part may both be configured by the network-side device.

For the target received power corresponding to the SRS, by way of example, the power parameter may directly include the target received power corresponding to the SRS, or may include a parameter used to calculate the target received power corresponding to the SRS, for example, a $P_{O_SRS,b,f,c}$ value.

It can be understood that the network-side device may configure a set of the power parameters for each resource type.

Optionally, the first random access message includes one of the following: Msg1, Msg3, MsgA, common PUCCH, Msg5, and SRS.

Optionally, the first transmission resource includes at least one of the following: an RO resource, a Msg3 PUSCH

resource, a MsgA PUSCH resource, a common PUCCH resource, a Msg5 PUSCH resource, and an SRS resource.

By way of example, the RO resource may include an RO resource for transmitting MsgA preamble in 2-step RACH or an RO resource for transmitting Msg1 preamble in 4-step RACH.

By way of example, the SRS resource may include an uplink SRS resource for UL beam management in idle (idle) or inactive (inactive) state.

Optionally, the common PUCCH is a PUCCH transmitted by the terminal on a common PUCCH resource in a case that no dedicated PUCCH resource is obtained.

Optionally, the Msg5 is the first PUSCH transmitted after the Msg4 physical downlink shared channel PDSCH is successfully received by the terminal.

The embodiments of the present application are described below with reference to examples:

Example 1: When UE performs full duplex transmission, the UE determines the transmit power of Msg1 or MsgA PRACH based on the RO type.

The RO type includes the following three types:

first type: an RO located on a time-domain resource of a UL time-domain format;
second type: an RO located on a time-domain resource of an X time-domain format and without downlink common/broadcast signals (for example, SSB/SIB/MIB/Paging); and
third type: an RO located on a time-domain resource of an X time-domain format and with downlink common/-broadcast signals (for example, SSB/SIB/MIB/Paging).

The network-side device configures different power offsets (power offset) for PRACH of the first type, second type, and third type, where:

power offset1 corresponding to the first type is 0;
power offset2 corresponding to the second type is X; and
power offset3 corresponding to the third type is Y.

When the UE selects to initiate RACH on an RO (that is, resource of the first type) located on a time-domain resource of the first time-domain format (that is, UL time-domain format), the PRACH transmit power is determined according to the following formula:

$$P_{PRACH,b,f,c}(i) = \min\{P_{CMAX,f,c}(i),\ P_{PRACH,target,f,c} + PL_{b,f,c}\}\ [dBm];$$

When the UE selects to initiate RACH on an RO (that is, resource of the second type) located on a time-domain resource of the second time-domain format (that is, X time-domain format) and without downlink common/broadcast signals (for example, SSB/SIB/MIB/Paging), the transmit power of PRACH is determined according to the following formula:

$P_{PRACH,b,f,c}(i) = \min\{P_{CMAX,f,c}(i), P_{PRACH,target,f,c} + offset2 + PL_{b,f,c}\}$ [dBm];

When the UE selects to initiate RACH on an RO (that is, resource of the third type) located on a time-domain resource of the second time-domain format (that is, X time-domain format) and with downlink common/broadcast signals (for example, SSB/SIB/MIB/Paging), the transmit power of PRACH is determined according to the following formula:

$P_{PRACH,b,f,c}(i) = \min\{P_{CMAX,f,c}(i), P_{PRACH,target,f,c} + offset3 + PL_{b,f,c}\}$ [dBm].

In each of the above formulas, $P_{CMAX,f,c}$ represents the maximum transmit power, $P_{PRACH,target,f,c}$ represents the target received power, $PL_{b,f,c}$ represents the path loss value, offset2 represents power offset2 corresponding to the second type, offset3 represents power offset3 corresponding to the third type, and i is an integer greater than or equal to 0.

Example 2: When UE performs full duplex transmission, the UE determines the transmit power of Msg3 based on the RO type.

The RO type includes the following three types:

first type: an RO located on a time-domain resource of a UL time-domain format;
second type: an RO located on a time-domain resource of an X time-domain format and without downlink common/broadcast signals (for example, SSB/SIB/MIB/Paging); and

third type: an RO located on a time-domain resource of an X time-domain format and with downlink common/-broadcast signals (for example, SSB/SIB/MIB/Paging).

The network-side device configures different Msg3-related power offsets for PRACH of the first type, second type, and third type, respectively, where:

for Msg1 using an RO of the first type, the corresponding power offset 1 of Msg3 is 0;
for Msg1 using an RO of the second type, the corresponding power offset 2 of Msg3 is X1; and
for Msg1 using an RO of the third type, the corresponding power offset 3 of Msg3 is Y1.

When the UE selects to initiate RACH on an RO (that is, resource of the first type) located on a time-domain resource of the first time-domain format (that is, UL time-domain format), and transmits Msg3 PUSCH scheduled by a RAR UL grant or DCI format 0_0 with CRC scrambled by a TC-RNTI (DCI format 0_0 with CRC scrambled by a TC-RNTI), the transmit power of Msg3 is determined according to the following formula:

$$P_{Msg3} = \min\left\{P_{CMAX},\ P_{UL_PC,PUSCH}\right\} [dBm];$$

When the UE selects to initiate RACH on an RO (that is, resource of the second type) located on a time-domain resource of the second time-domain format (that is, X time-domain format) and without downlink common/broadcast signals (for example, SSB/SIB/MIB/Paging), and transmits Msg3 PUSCH scheduled by RAR UL grant or DCI format 0_0 with CRC scrambled by a TC-RNTI, the transmit power of Msg3 is determined according to the following formula:

$$P_{Msg3} = \min\left\{P_{CMAX},\ P_{UL_PC,PUSCH} + \text{offset2}\right\} [dBm];$$

When the UE selects to initiate RACH on an RO (that is, resource of the third type) located on a time-domain resource of the second time-domain format (that is, X time-domain format) and with downlink common/broadcast signals (for example, SSB/SIB/MIB/Paging), and transmits Msg3 PUSCH scheduled by RAR UL grant or DCI format 0_0 with CRC scrambled by a TC-RNTI, the transmit power of Msg3 is determined according to the following formula:

$$P_{Msg3} = \min\left\{P_{CMAX},\ P_{UL_PC,PUSCH} + \text{offset3}\right\} [dBm].$$

In each of the above formulas, $P_{CMA}$ represents the maximum transmit power, $P_{Ul_PC,PUSCH}$ represents the transmit power determined based on uplink power control, offset2 represents power offset2 corresponding to the second type, offset3 represents power offset3 corresponding to the third type, and i is an integer greater than or equal to 0.

By way of example, the uplink power control may be implemented based on the following formula:

$$P = \min[P_{CMAX}, \{p_0(j) + \alpha(k) * PL(q)\} + \{f(l)\} + \{10lgM + \Delta\}]$$

In the above formula, P represents the power determined based on uplink power control, $P_{CMAX}$ represents the configured transmit power of the UE on the uplink carrier (the maximum transmit power allowed on the uplink carrier), $p_0(j)$ represents the open-loop received power target value, which is related to the target SINR and interference intensity expected by the network side. A larger target value generally corresponds to a higher uplink transmit power and a higher received SINR. PL(q) represents the path loss estimation, where q is an index selected from a set of path loss estimation values maintained by the UE. For a same UE, different reference signals in the same serving cell may also experience different path losses. For example, an SSB beam may have a wider beamwidth and lower beamforming gain, resulting in a larger path loss estimate, while a CSI-RS beam may have a narrower beamwidth and higher beamforming gain, resulting in a smaller path loss estimate. Accordingly, the same UE needs to maintain multiple path loss estimation values, and select a path loss estimation value based on an index configured or indicated by the network side to calculate the transmit power.

The closed-loop part f(l) represents an l-th power control offset (adjustment) state value, which enables rapid adjustment of transmit power for a particular UE transmission based on the effect of a previous transmission. The adjustment information is quickly adjusted through physical layer signaling (for example, DCI) (related parameters are still semi-statically configured by higher layer signaling such as RRC). Such adjustment is referred to as closed-loop adjustment. For example, if the base station finds that the transmit power of a certain transmission of the UE is excessively high, the base station may indicate, via DCI when scheduling a subsequent uplink transmission of the same type, that the

UE reduces the transmit power by 1 dB. The closed-loop power control information carried in DCI is referred to as a TPC, expressed as $\delta(l)$.

Example 3: When UE performs full duplex transmission, the UE determines the transmit power of MsgA PUSCH based on the RO type.

The RO type includes the following three types:

first type: an RO located on a time-domain resource of a UL time-domain format;
second type: an RO located on a time-domain resource of an X time-domain format and without downlink common/broadcast signals (for example, SSB/SIB/MIB/Paging); and
third type: an RO located on a time-domain resource of an X time-domain format and with downlink common/-broadcast signals (for example, SSB/SIB/MIB/Paging).

The network-side device configures different power offsets corresponding to MsgA PUSCH for PRACH of the first type, second type, and third type, where:

for MsgA PRACH using an RO of the first type, the corresponding power offset 1 of MsgA PUSCH is 0;
for MsgA PRACH using an RO of the second type, the corresponding power offset 2 of MsgA PUSCH is X2; and
for MsgA PRACH using an RO of the third type, the corresponding power offset 3 of MsgA PUSCH is Y2.

When the UE selects to initiate MsgA PRACH on an RO (that is, resource of the first type) located on a time-domain resource of the first time-domain format (that is, UL time-domain format), and transmits MsgA PUSCH, the transmit power of MsgA PUSCH is determined according to the following formula:

$$\mathrm{P_{MsgA,PUSCH}} = \min\{\mathrm{P_{CMAX}},\ \mathrm{P_{UL_PC,PUSCH}}\}\ [\mathrm{dBm}];$$

When the UE selects to initiate MsgA PRACH on an RO (that is, resource of the third type) located on a time-domain resource of the second time-domain format (that is, X time-domain format) and with downlink common/broadcast signals (for example, SSB/SIB/MIB/Paging), and transmits MsgA PUSCH, the transmit power of MsgA PUSCH is determined according to the following formula:

$$\mathrm{P_{MsgA,PUSCH}} = \min\{\mathrm{P_{CMAX}},\ \mathrm{P_{UL_PC,PUSCH}} + \mathrm{offset2}\}\ [\mathrm{dBm}];$$

When the UE selects to initiate MsgA PRACH on an RO (that is, resource of the third type) located on a time-domain resource of the second time-domain format (that is, X time-domain format) and with downlink common/broadcast signals (for example, SSB/SIB/MIB/Paging), and transmits MsgA PUSCH, the transmit power of MsgA PUSCH is determined according to the following:

$$\mathrm{P_{MsgA,PUSCH}} = \min\{\mathrm{P_{CMAX}},\ \mathrm{P_{UL_PC,PUSCH}} + \mathrm{offset3}\}\ [\mathrm{dBm}].$$

In each of the above formulas, $P_{CMA}$ represents the maximum transmit power, $P_{UL_PC,PUSCH}$ represents the transmit power determined based on uplink power control, offset2 represents power offset2 corresponding to the second type, offset3 represents power offset3 corresponding to the third type, and i is an integer greater than or equal to 0.

Example 4: When UE performs full duplex transmission, the UE determines the power ramping step size of Msg1 or MsgA PRACH based on the RO type.

In this example, when determining the transmit power of PRACH, the power ramping step size parameter may be further determined based on the RO resource in addition to the power parameters determined in the above examples (that is, Example 1, Example 2, or Example 3).

The RO type includes the following three types:

first type: an RO located on a time-domain resource of a UL time-domain format being UL;
second type: an RO located on a time-domain resource of an X time-domain format and without downlink common/broadcast signals (for example, SSB/SIB/MIB/Paging); and
third type: an RO located on a time-domain resource of an X time-domain format and with downlink common/-broadcast signals (for example, SSB/SIB/MIB/Paging).

The network-side device configures different power ramping steps (power ramping step) for PRACH of the first

type, second type, and third type, where:

power ramping step1 corresponding to the first type is X3;
power ramping step2 corresponding to the second type is Y3; and
power ramping step3 corresponding to the third type is Z.

After the UE selects to initiate RACH on an RO (that is, resource of the first type) located on a time-domain resource of the first time-domain format (that is, UL time-domain format), when the UE needs to re-initiate RACH, and continues to select an RO of the first type to transmit PRACH, the transmit power of PRACH is determined according to the following formula:

$P_{PRACH,b,f,c}(i) = \min\{P_{CMAX,f,c}(i), P_{PRACH,target,f,c} + PL_{b,f,c} + \text{power ramping step1}\}$;

After the UE selects to initiate RACH on an RO (that is, resource of the second type) located on a time-domain resource of the second time-domain format (that is, X time-domain format) and without downlink common/broadcast signals (for example, SSB/SIB/MIB/Paging), when the UE needs to re-initiate RACH, and continues to select an RO of the second type to transmit PRACH, the transmit power of PRACH is determined according to the following:
$P_{PRACH,b,f,c}(i)$

After the UE selects to initiate RACH on an RO (that is, type 3) located on a time-domain resource of an X time-domain format and with downlink common/broadcast signals (for example, SSB/SIB/MIB/Paging), when the UE needs to re-initiate RACH, and continues to select RO type 3 to transmit PRACH, the transmit power of PRACH is determined according to the following:
$P_{PRACH,b,f,c}(i)$

After the UE selects to initiate RACH on an RO (that is, resource of the first type) located on a time-domain resource of the first time-domain format (that is, UL time-domain format), when the UE needs to re-initiate RACH, and continues to select an RO of the first type to transmit PRACH, the transmit power of PRACH is ramped up according to Power ramping step 1. When the UE needs to re-initiate RACH again, and selects an RO of the second type to transmit PRACH, the transmit power of PRACH is determined based on the following formula:

$P_{PRACH,b,f,c}(i) = \min\{P_{CMAX,f,c}(i), P_{PRACH,target,f,c} + PL_{b,f,c} + \text{power ramping step1} + \text{power ramping step2}\}$, in this case, RACH power ramping of different types may be accumulated; or,
$P_{PRACH,b,f,c}(i) = \min\{P_{CMAX,f,c}(i), P_{PRACH,target,f,c} + PL_{b,f,c} + \text{power ramping step2}\}$, in this case, the RACH power ramping of different types is not accumulated.

In each of the above formulas, $P_{CMAX,f,c}$ represents the maximum transmit power, $P_{PRACH,target,f,c}$ represents the target received power, $PL_{b,f,c}$ represents the path loss value, and i is an integer greater than or equal to 0.

In summary, the power control method provided in the embodiments of the present application enables the UE, when performing full duplex transmission, to reduce the impact of self-interference, thereby ensuring the reception performance of downlink transmission.

Referring to FIG. 4, FIG. 4 is a flowchart of a power control method according to an embodiment of the present application. The method may be executed by a network-side device. As shown in FIG. 4, it includes the following step: step 401: A network-side device transmits a first power parameter, where the first power control parameter is used for transmitting a first random access message, and the first power parameter includes a power parameter corresponding to at least one resource type, and the resource type is a resource type of a transmission resource for a random access message.

Optionally, the resource type is determined based on at least one of the following: a time-domain resource in which the random access message is located, and a relationship between the time-domain resource in which the random access message is located and a time-domain resource in which a target signal is located; where the target signal includes a downlink common signal or a downlink broadcast signal.

Optionally, the resource type includes at least one of the following:

a first type, where the first type is used to indicate a transmission resource for a random access message, the random access message being located on a time-domain resource of a first time-domain format;
a second type, where the second type is used to indicate a transmission resource for a random access message, the random access message being located on a time-domain resource of a second time-domain format and without a target signal;
a third type, where the third type is used to indicate a transmission resource for a random access message, the random

access message being located on a time-domain resource of a second time-domain format and with a target signal; and

a fourth type, where the fourth type is used to indicate a transmission resource for a random access message, the random access message being located on a target time-domain resource, a time interval between the target time-domain resource and a synchronization signal block SSB is greater than a preset value, and the target time-domain resource contains a target signal; where

the first time-domain format is a time-domain format for uplink-only transmission, the second time-domain format is a time-domain format for full duplex transmission, and the target signal includes a downlink common signal or a downlink broadcast signal.

Optionally, in a case that the first random access message is Msg1 or MsgA physical random access channel PRACH, the power parameter includes at least one of the following: a target received power corresponding to Msg1 or MsgA PRACH, a power offset value corresponding to Msg1 or MsgA PRACH, a power ramping parameter corresponding to Msg1 or MsgA PRACH, and a maximum transmit power corresponding to Msg1 or MsgA PRACH;
or,

in a case that the first random access message is Msg3, the power parameter includes at least one of the following: a power offset value corresponding to Msg3, and a power compensation factor corresponding to Msg3;
or,
in a case that the first random access message is MsgA physical uplink shared channel PUSCH, the power parameter includes at least one of the following: a power offset value corresponding to MsgA PUSCH, and a power compensation factor corresponding to MsgA PUSCH;
or,
in a case that the first random access message is a common physical uplink control channel PUCCH, the power parameter includes at least one of the following: a power offset value corresponding to common PUCCH, and a power compensation factor corresponding to common PUCCH;
or,
in a case that the first random access message is Msg5 PUSCH, the power parameter includes at least one of the following: a power offset value corresponding to Msg5 PUSCH, a power compensation factor corresponding to Msg5 PUSCH, and a target received power corresponding to Msg5 PUSCH;
or,
in a case that the first random access message is a sounding reference signal SRS, the power parameter includes at least one of the following: a power offset value corresponding to SRS, a power compensation factor corresponding to SRS, and a target received power corresponding to SRS.

Optionally, the first random access message includes one of the following: Msg1, Msg3, MsgA, common PUCCH, Msg5, and SRS.

Optionally, the transmission resource for the random access message includes at least one of the following: an RO resource, a Msg3 PUSCH resource, a MsgA PUSCH resource, a common PUCCH resource, a Msg5 PUSCH resource, and an SRS resource.

It should be noted that the implementation of this embodiment may be referred to the related description of the embodiment shown in FIG. 3, and details are not repeated here.

It should be noted that the power control method provided in this embodiment of the present application may be executed by a power control apparatus or a control module for executing the power control method in the power control apparatus. In the embodiments of the present application, the power control apparatus executing the power control method is taken as an example to illustrate the power control apparatus provided in the embodiments of the present application.

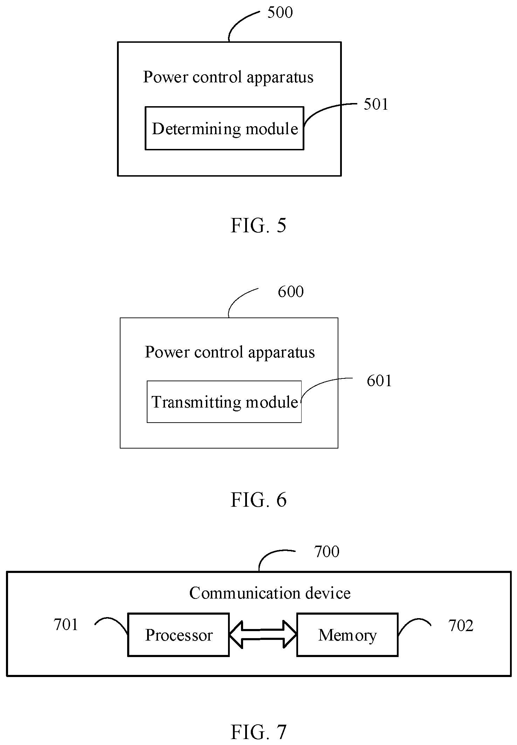

Referring to FIG. 5, FIG. 5 is a structural diagram of a power control apparatus according to an embodiment of the present application. As shown in FIG. 5, the power control apparatus 500 includes:

a determining module 501, configured to, in a case that a terminal operates in a full duplex mode, determine a transmit power of a first random access message based on random access related information; where

the random access related information includes at least one of the following: a resource type of a first transmission resource, and resource location related information of the first transmission resource. The first transmission resource is a transmission resource for a target random access message, and the target random access message includes at least one of the first random access message and a second random access message.

Optionally, the resource type of the first transmission resource is determined based on at least one of the

following: a time-domain format of a time-domain resource in which the target random access message is located, and a relationship between the time-domain resource in which the target random access message is located and a time-domain resource in which a target signal is located; where the target signal includes a downlink common signal or a downlink broadcast signal.

Optionally, the resource type includes at least one of the following:

a first type, where the first type is used to indicate a transmission resource for a random access message, the random access message being located on a time-domain resource of a first time-domain format;
a second type, where the second type is used to indicate a transmission resource for a random access message, the random access message being located on a time-domain resource of a second time-domain format and without a target signal;
a third type, where the third type is used to indicate a transmission resource for a random access message, the random access message being located on a time-domain resource of a second time-domain format and with a target signal; and
a fourth type, where the fourth type is used to indicate a transmission resource for a random access message, the random access message being located on a target time-domain resource, a time interval between the target time-domain resource and a synchronization signal block SSB is greater than or equal to a preset value, and the target time-domain resource contains a target signal; where
the first time-domain format is a time-domain format for uplink-only transmission, the second time-domain format is a time-domain format for full duplex transmission, and the target signal includes a downlink common signal or a downlink broadcast signal.

Optionally, the resource location related information of the first transmission resource includes at least one of time-domain location related information of the first transmission resource and frequency-domain location related information of the first transmission resource.

Optionally, the frequency-domain location related information of the first transmission resource includes at least one of the following: a location of a frequency-domain resource of the first transmission resource, and a frequency gap between a frequency-domain resource of the first transmission resource and a downlink transmission resource.

Optionally, the downlink transmission resource includes at least one of the following:
a downlink subband, a frequency-domain resource of a downlink common signal, and a frequency-domain resource of a downlink broadcast signal.

Optionally, the first transmission resource is located on a time-domain resource of the second time-domain format, and the second time-domain format is a time-domain format for full duplex transmission.

Optionally, the apparatus further includes:
a receiving module, configured to receive a first power parameter, where the first power parameter is used for transmitting the first random access message, the first power parameter includes a power parameter corresponding to at least one resource type, and the resource type is a resource type of a transmission resource for a random access message.

The determining module is specifically configured to determine a transmit power of a first random access message based on random access related information and the first power parameter.

Optionally, in a case that the first random access message is Msg1 or MsgA physical random access channel PRACH, the power parameter includes at least one of the following: a target received power corresponding to Msg1 or MsgA PRACH, a power offset value corresponding to Msg1 or MsgA PRACH, a power ramping parameter corresponding to Msg1 or MsgA PRACH, and a maximum transmit power corresponding to Msg1 or MsgA PRACH;
or,

in a case that the first random access message is Msg3, the power parameter includes at least one of the following: a power offset value corresponding to Msg3, and a power compensation factor corresponding to Msg3;
or,
in a case that the first random access message is MsgA physical uplink shared channel PUSCH, the power parameter includes at least one of the following: a power offset value corresponding to MsgA PUSCH, and a power compensation factor corresponding to MsgA PUSCH;
or,
in a case that the first random access message is a common physical uplink control channel PUCCH, the power parameter includes at least one of the following: a power offset value corresponding to common PUCCH, and a power compensation factor corresponding to common PUCCH;
or,
in a case that the first random access message is Msg5 PUSCH, the power parameter includes at least one of the following: a power offset value corresponding to Msg5 PUSCH, a power compensation factor corresponding to Msg5

PUSCH, and a target received power corresponding to Msg5 PUSCH;

or,

in a case that the first random access message is a sounding reference signal SRS, the power parameter includes at least one of the following: a power offset value corresponding to SRS, a power compensation factor corresponding to SRS, and a target received power corresponding to SRS.

Optionally, the first random access message includes one of the following: Msg1, Msg3, MsgA, common PUCCH, Msg5, and SRS.

Optionally, the first transmission resource includes at least one of the following: an RO resource, a Msg3 PUSCH resource, a MsgA PUSCH resource, a common PUCCH resource, a Msg5 PUSCH resource, and an SRS resource.

The power control apparatus in the embodiments of the present application may be an electronic device, such as an electronic device with an operating system, or a component in an electronic device, such as an integrated circuit or a chip. The electronic device may be a terminal or a device other than a terminal. By way of example, the terminal may include, but is not limited to, the types of the terminal 11 listed above, and the other device may be a server, a network attached storage (Network Attached Storage, NAS), or the like. This is not specifically limited in this embodiment of the present application.

The power control apparatus provided in the embodiments of the present application can implement each process implemented by the method embodiment in FIG. 3, with the same technical effects achieved. To avoid repetition, details are not described herein.

Referring to FIG. 6, FIG. 6 is a structural diagram of a power control apparatus according to an embodiment of the present application. As shown in FIG. 6, the power control apparatus 600 includes:

a transmitting module 601, configured to transmit a first power parameter, where the first power control parameter is used for transmitting a first random access message, the first power parameter includes a power parameter corresponding to at least one resource type, and the resource type is a resource type of a transmission resource for a random access message.

Optionally, the resource type is determined based on at least one of the following: a time-domain resource in which the random access message is located, and a relationship between the time-domain resource in which the random access message is located and a time-domain resource in which a target signal is located; where the target signal includes a downlink common signal or a downlink broadcast signal.

Optionally, the resource type includes at least one of the following:

a first type, where the first type is used to indicate a transmission resource for a random access message, the random access message being located on a time-domain resource of a first time-domain format;

a second type, where the second type is used to indicate a transmission resource for a random access message, the random access message being located on a time-domain resource of a second time-domain format and without a target signal;

a third type, where the third type is used to indicate a transmission resource for a random access message, the random access message being located on a time-domain resource of a second time-domain format and with a target signal; and

a fourth type, where the fourth type is used to indicate a transmission resource for a random access message, the random access message being located on a target time-domain resource, a time interval between the target time-domain resource and a synchronization signal block SSB is greater than a preset value, and the target time-domain resource contains a target signal; where

the first time-domain format is a time-domain format for uplink-only transmission, the second time-domain format is a time-domain format for full duplex transmission, and the target signal includes a downlink common signal or a downlink broadcast signal.

Optionally, in a case that the first random access message is Msg1 or MsgA physical random access channel PRACH, the power parameter includes at least one of the following: a target received power corresponding to Msg1 or MsgA PRACH, a power offset value corresponding to Msg1 or MsgA PRACH, a power ramping parameter corresponding to Msg1 or MsgA PRACH, and a maximum transmit power corresponding to Msg1 or MsgA PRACH;

or,

in a case that the first random access message is Msg3, the power parameter includes at least one of the following: a power offset value corresponding to Msg3, and a power compensation factor corresponding to Msg3;

or,

in a case that the first random access message is MsgA physical uplink shared channel PUSCH, the power parameter includes at least one of the following: a power offset value corresponding to MsgA PUSCH, and a power compensation

factor corresponding to MsgA PUSCH;

or,

in a case that the first random access message is a common physical uplink control channel PUCCH, the power parameter includes at least one of the following: a power offset value corresponding to common PUCCH, and a power compensation factor corresponding to common PUCCH;

or,

in a case that the first random access message is Msg5 PUSCH, the power parameter includes at least one of the following: a power offset value corresponding to Msg5 PUSCH, a power compensation factor corresponding to Msg5 PUSCH, and a target received power corresponding to Msg5 PUSCH;

or,

in a case that the first random access message is a sounding reference signal SRS, the power parameter includes at least one of the following: a power offset value corresponding to SRS, a power compensation factor corresponding to SRS, and a target received power corresponding to SRS.

Optionally, the first random access message includes one of the following: Msg1, Msg3, MsgA, common PUCCH, Msg5, and SRS.

Optionally, the transmission resource for the random access message includes at least one of the following: an RO resource, a Msg3 PUSCH resource, a MsgA PUSCH resource, a common PUCCH resource, a Msg5 PUSCH resource, and an SRS resource.

The power control apparatus in the embodiments of the present application may be an electronic device, such as an electronic device with an operating system, or a component in an electronic device, such as an integrated circuit or a chip. The electronic device may be a network-side device or a device other than a network-side device. By way of example, the network-side device may include, but is not limited to, the types of the network-side device 12 listed above, and the other device may be a server, a network attached storage (Network Attached Storage, NAS), or the like. This is not specifically limited in this embodiment of the present application.

The power control apparatus provided in the embodiments of the present application can implement each process implemented by the method embodiment in FIG. 4, with the same technical effects achieved. To avoid repetition, details are not described herein.

Optionally, as shown in FIG. 7, an embodiment of the present application further provides a communication device 700, including a processor 701 and a memory 702. A program or an instruction capable of being run on the processor 701 is stored on the memory 702. For example, when the communication device 700 is a terminal, the program or instruction, when executed by the processor 701, implement each step of the power control method embodiment, with the same technical effects achieved. When the communication device 700 is a network-side device, the program or instructions, when executed by the processor 701, implement each step of the above power control method embodiment, with the same technical effects achieved. To avoid repetition, details are not described herein.

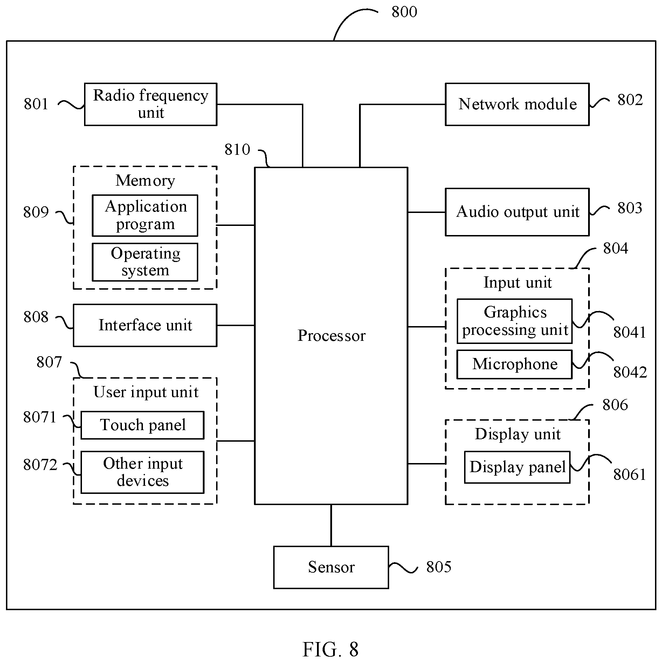

An embodiment of the present application further provides a terminal, including a processor and a communication interface. The processor is configured to, in a case that a terminal operates in a full duplex mode, determine a transmit power of a first random access message based on random access related information; where the random access related information includes at least one of the following: a resource type of a first transmission resource, and resource location related information of the first transmission resource. The first transmission resource is a transmission resource for a target random access message, and the target random access message includes at least one of the first random access message and a second random access message. This terminal embodiment corresponds to the above terminal side method embodiment. All processes and implementations in the foregoing method embodiment are applicable to this terminal embodiment, with the same technical effect achieved. Specifically, FIG. 8 is a schematic diagram of a hardware structure of a terminal implementing an embodiment of the present application.

The terminal 800 includes, but is not limited to, at least some of the components such as a radio frequency unit 801, a network module 802, an audio output unit 803, an input unit 804, a sensor 805, a display unit 806, a user input unit 807, an interface unit 808, a memory 809, and a processor 810.

Those skilled in the art can understand that the terminal 800 may further include a power supply (for example, a battery) supplying power to the components, and the power supply may be logically connected to the processor 810 through a power management system. In this way, functions such as charge management, discharge management, and power consumption management are implemented by using the power management system. The structure of the terminal shown in FIG. 8 does not constitute any limitation on the terminal, and the terminal may include more or fewer components than shown in the figure, or combine some components, or have different component arrangements. Details are not described herein.

It should be understood that in the embodiments of the present application, the input unit 804 may include a graphics processing unit (Graphics Processing Unit, GPU) 8041 and a microphone 8042. The graphics processing unit 8041 is configured to process image data of still pictures or videos obtained by an image capture device (such as a camera)

in a video capture mode or an image capture mode. The display unit 806 may include a display panel 8061, which can be configured in the form of a liquid crystal display, an organic light-emitting diode, or the like. The user input unit 807 includes at least one of a touch panel 8071 and other input devices 8072. The touch panel 8071, also called a touch screen. The touch panel 8071 may include two parts: a touch detection device and a touch controller. Other input devices 8072 may include but are not limited to physical keyboards, function keys (such as volume control keys, switch keys, etc.), trackballs, mice, joysticks, which will not be repeated here.

In the embodiments of the present application, the radio frequency unit 801 receives downlink data from a network-side device and transmits the data to the processor 810 for processing; and the radio frequency unit 801 can additionally send uplink data to the network-side device. Generally, the radio frequency unit 801 includes, but is not limited to, an antenna, an amplifier, a transceiver, a coupler, a low noise amplifier, and a duplexer.

The memory 809 may be configured to store software programs or instructions and various data. The memory 809 may primarily include a first storage area for storing a program or instruction and second storage area for storing data. The first storage area may store an operating system, an application program or instructions required by at least one function (for example, sound play function or image play function), and the like. In addition, the memory 809 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 809 in the embodiments of the present application includes, but is not limited to, these and any other suitable types of memory.

The processor 810 may include one or more processing units. Optionally, the processor 810 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 810.

The processor 810 is configured to, in a case that a terminal operates in a full duplex mode, determine a transmit power of a first random access message based on random access related information; where the random access related information includes at least one of the following: a resource type of a first transmission resource, and resource location related information of the first transmission resource. The first transmission resource is a transmission resource for a target random access message, and the target random access message includes at least one of the first random access message and a second random access message.

Optionally, the resource type of the first transmission resource is determined based on at least one of the following: a time-domain format of a time-domain resource in which the target random access message is located, and a relationship between the time-domain resource in which the target random access message is located and a time-domain resource in which a target signal is located; where the target signal includes a downlink common signal or a downlink broadcast signal.

Optionally, the resource type includes at least one of the following:

a first type, where the first type is used to indicate a transmission resource for a random access message, the random access message being located on a time-domain resource of a first time-domain format;

a second type, where the second type is used to indicate a transmission resource for a random access message, the random access message being located on a time-domain resource of a second time-domain format and without a target signal;

a third type, where the third type is used to indicate a transmission resource for a random access message, the random access message being located on a time-domain resource of a second time-domain format and with a target signal; and

a fourth type, where the fourth type is used to indicate a transmission resource for a random access message, the random access message being located on a target time-domain resource, a time interval between the target time-domain resource and a synchronization signal block SSB is greater than or equal to a preset value, and the target time-domain resource contains a target signal; where

the first time-domain format is a time-domain format for uplink-only transmission, the second time-domain format is a time-domain format for full duplex transmission, and the target signal includes a downlink common signal or a downlink broadcast signal.

Optionally, the resource location related information of the first transmission resource includes at least one of time-domain location related information of the first transmission resource and frequency-domain location related information of the first transmission resource.

Optionally, the frequency-domain location related information of the first transmission resource includes at least one of the following: a location of a frequency-domain resource of the first transmission resource, and a frequency gap between a frequency-domain resource of the first transmission resource and a downlink transmission resource.

Optionally, the downlink transmission resource includes at least one of the following:
a downlink subband, a frequency-domain resource of a downlink common signal, and a frequency-domain resource of a downlink broadcast signal.

Optionally, the first transmission resource is located on a time-domain resource of the second time-domain format, and the second time-domain format is a time-domain format for full duplex transmission.

Optionally, the radio frequency unit 801 is configured to receive a first power parameter, where the first power parameter is used for transmitting the first random access message, the first power control parameter includes a power parameter corresponding to at least one resource type, and the resource type is a resource type of a transmission resource for a random access message.

The determining a transmit power of a first random access message based on random access related information includes:
determining a transmit power of a first random access message based on random access related information and the first power parameter.

Optionally, in a case that the first random access message is Msg1 or MsgA physical random access channel PRACH, the power parameter includes at least one of the following: a target received power corresponding to Msg1 or MsgA PRACH, a power offset value corresponding to Msg1 or MsgA PRACH, a power ramping parameter corresponding to Msg1 or MsgA PRACH, and a maximum transmit power corresponding to Msg1 or MsgA PRACH;
or,

in a case that the first random access message is Msg3, the power parameter includes at least one of the following: a power offset value corresponding to Msg3, and a power compensation factor corresponding to Msg3;
or,
in a case that the first random access message is MsgA physical uplink shared channel PUSCH, the power parameter includes at least one of the following: a power offset value corresponding to MsgA PUSCH, and a power compensation factor corresponding to MsgA PUSCH;
or,
in a case that the first random access message is a common physical uplink control channel PUCCH, the power parameter includes at least one of the following: a power offset value corresponding to common PUCCH, and a power compensation factor corresponding to common PUCCH;
or,
in a case that the first random access message is Msg5 PUSCH, the power parameter includes at least one of the following: a power offset value corresponding to Msg5 PUSCH, a power compensation factor corresponding to Msg5 PUSCH, and a target received power corresponding to Msg5 PUSCH;
or,
in a case that the first random access message is a sounding reference signal SRS, the power parameter includes at least one of the following: a power offset value corresponding to SRS, a power compensation factor corresponding to SRS, and a target received power corresponding to SRS.

Optionally, the first random access message includes one of the following: Msg1, Msg3, MsgA, common PUCCH, Msg5, and SRS.

Optionally, the first transmission resource includes at least one of the following: an RO resource, a Msg3 PUSCH resource, a MsgA PUSCH resource, a common PUCCH resource, a Msg5 PUSCH resource, and an SRS resource.

It can be understood that the implementation processes of the various implementation manners mentioned in this embodiment can be referred to the related descriptions of the foregoing method embodiments, with the same or corresponding technical effects achieved. To avoid repetition, details are not described herein.

An embodiment of the present application further provides a network-side device, including a processor and a communication interface. The communication interface is configured to transmit a first power parameter, where the first power control parameter is used for transmitting a first random access message, the first power parameter includes a power parameter corresponding to at least one resource type, and the resource type is a resource type of a transmission resource for a random access message. This network-side device embodiment corresponds to the above network-side device method embodiment, and each implementation process and implementation manner of the above method embodiment can be applied to this network-side device embodiment, with the same technical effects achieved.

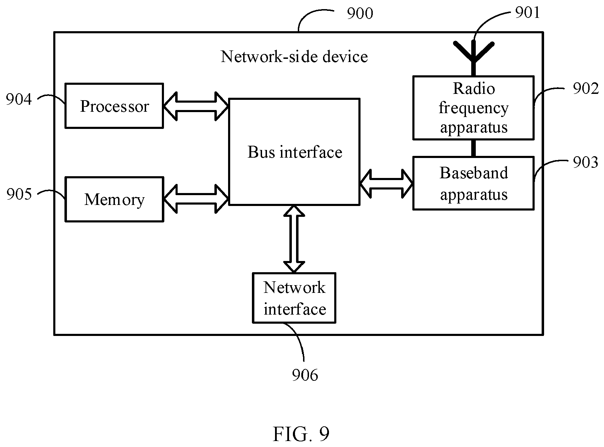

Specifically, an embodiment of the present application further provides a network-side device. As shown in FIG. 9, the network-side device 900 includes an antenna 901, a radio frequency apparatus 902, a baseband apparatus 903, a processor 904, and a memory 905. The antenna 901 is connected to the radio frequency apparatus 902. In the uplink direction, the radio frequency apparatus 902 receives information through the antenna 901, and transmits the received information to the baseband apparatus 903 for processing. In the downlink direction, the baseband apparatus 903 processes the information to be transmitted and transmits the information to the radio frequency apparatus 902; and the radio frequency apparatus 902 processes the received information and then transmits the information out through the antenna 901.

The method executed by the network-side device in the above embodiments can be implemented in the baseband apparatus 903, and the baseband apparatus 903 includes a baseband processor.

The baseband apparatus 903 may include at least one baseband board, on which multiple chips are provided, as shown in FIG. 9. One chip, for example, is a baseband processor, connected to the memory 905 through a bus interface to call a program in the memory 905 and execute the network device operations shown in the above method embodiments.

The network-side device can also include a network interface 906, which is, for example, a common public radio interface (Common Public Radio Interface, CPRI).

Specifically, the network-side device 900 of the embodiment of the present application further includes: instructions or programs stored on the memory 905 and executable on the processor 904. The processor 904 calls the instructions or programs in the memory 905 to execute the methods executed by each module shown in FIG. 6, and achieves the same technical effect. To avoid repetition, details are not described herein.

An embodiment of the present application further provides a readable storage medium, on which a program or instructions are stored. When the program or instructions are executed by a processor, each process of the above power control method embodiment is implemented, and the same technical effect can be achieved. To avoid repetition, details are not described herein.

Where, the processor is the processor in the terminal described in the above embodiments. The readable storage medium includes a computer-readable storage medium, such as a computer read-only memory ROM, random access memory RAM, magnetic disk or optical disk, etc. In some embodiments, the readable storage medium can be a non-transitory readable storage medium.

Another embodiment of the present application provides a chip, the chip including a processor and a communication interface, the communication interface and the processor being coupled, the processor being configured to run a program or instructions to implement each process of the above power control method embodiment, with the same technical effects achieved. To avoid repetition, details are not described herein.

It should be understood that the chip mentioned in the embodiments of the present application can also be called a system-level chip, a system chip, a chip system, or a system-on-chip, etc.

Another embodiment of the present application provides a computer program/program product, the computer program/program product being stored in a storage medium, the computer program/program product being executed by at least one processor to implement each process of the above power control method embodiment, with the same technical effects achieved. To avoid repetition, details are not described herein.

An embodiment of the present application further provides a power control system, including: a terminal and a network-side device, the terminal being configured to execute each process of FIG. 3 and the above various method embodiments, the network-side device being configured to execute each process of FIG. 4 and the above various method embodiments, with the same technical effects achieved. To avoid repetition, details are not described herein.

It should be noted that in this document, the terms "include", "comprise" or any other variants thereof are intended to cover non-exclusive inclusion, so that a process, method, article or device including a series of elements not only includes those elements, but also includes other elements not explicitly listed, or also includes elements inherent to such process, method, article, or apparatus. Without more restrictions, an element defined by the statement "including one..." does not exclude the existence of another identical element in the process, method, article, or apparatus including the element. In addition, it should be pointed out that the scope of the methods and apparatuses in the embodiments of the present application is not limited to performing functions in the order shown or discussed, but can also include performing functions in a substantially simultaneous manner or in a reverse order, depending on the functions involved. For example, the described methods may be executed in an order different from the described order, and steps may be added, omitted or combined. In addition, features described with reference to certain examples may be combined in other examples.

Through the description of the above embodiments, those skilled in the art can clearly understand that the above embodiment methods may be implemented by a computer software product plus a necessary universal hardware platform, or by hardware. The computer software product is stored in a storage medium (such as ROM, RAM, magnetic disk, or optical disk), including several instructions to make a terminal or network-side device execute the methods described in the embodiments of the present application.

The embodiments of the present application have been described above with reference to the accompanying drawings, but the present application is not limited to the above specific implementations. The above specific imple-

mentations are merely illustrative and not restrictive. Under the enlightenment of the present application, those of ordinary skill in the art can make many forms of implementations without departing from the purpose of the present application and the scope protected by the claims, and these implementations all fall within the protection of the present application.

## Claims

1. A power control method, comprising:

   in a case that a terminal operates in a full duplex mode, determining, by the terminal, a transmit power of a first random access message based on random access related information; wherein
   the random access related information comprises at least one of the following: a resource type of a first transmission resource, and resource location related information of the first transmission resource; wherein the first transmission resource is a transmission resource for a target random access message, and the target random access message comprises at least one of the first random access message and a second random access message.

2. The method according to claim 1, wherein the resource type of the first transmission resource is determined based on at least one of the following: a time-domain format of a time-domain resource in which the target random access message is located, and a relationship between the time-domain resource in which the target random access message is located and a time-domain resource in which a target signal is located; wherein the target signal comprises a downlink common signal or a downlink broadcast signal.

3. The method according to claim 1 or 2, wherein the resource type comprises at least one of the following:

   a first type, wherein the first type is used to indicate a transmission resource for a random access message, the random access message being located on a time-domain resource of a first time-domain format;
   a second type, wherein the second type is used to indicate a transmission resource for a random access message, the random access message being located on a time-domain resource of a second time-domain format and without a target signal;
   a third type, wherein the third type is used to indicate a transmission resource for a random access message, the random access message being located on a time-domain resource of a second time-domain format and with a target signal; and
   a fourth type, wherein the fourth type is used to indicate a transmission resource for a random access message, the random access message being located on a target time-domain resource, a time interval between the target time-domain resource and a synchronization signal block SSB is greater than or equal to a preset value, and the target time-domain resource contains a target signal; wherein
   the first time-domain format is a time-domain format for uplink-only transmission, the second time-domain format is a time-domain format for full duplex transmission, and the target signal comprises a downlink common signal or a downlink broadcast signal.

4. The method according to any one of claims 1 to 3, wherein the resource location related information of the first transmission resource comprises at least one of time-domain location related information of the first transmission resource and frequency-domain location related information of the first transmission resource.

5. The method according to claim 4, wherein the frequency-domain location related information of the first transmission resource comprises at least one of the following: a location of a frequency-domain resource of the first transmission resource, and a frequency gap between a frequency-domain resource of the first transmission resource and a downlink transmission resource.

6. The method according to claim 5, wherein the downlink transmission resource comprises at least one of the following: a downlink subband, a frequency-domain resource of a downlink common signal, and a frequency-domain resource of a downlink broadcast signal.

7. The method according to claim 5 or 6, wherein the first transmission resource is located on a time-domain resource of a second time-domain format, and the second time-domain format is a time-domain format for full duplex transmission.

8. The method according to any one of claims 1 to 7, wherein the method further comprises:

receiving, by the terminal, a first power parameter, wherein the first power control parameter is used for transmitting the first random access message, the first power parameter comprises a power parameter corresponding to at least one resource type, and the resource type is a resource type of a transmission resource for a random access message; wherein
the determining, by the terminal, a transmit power of a first random access message based on random access related information comprises:
determining, by the terminal, a transmit power of a first random access message based on random access related information and the first power parameter.

**9.** The method according to claim 8, wherein in a case that the first random access message is Msg1 or MsgA physical random access channel PRACH, the power parameter comprises at least one of the following: a target received power corresponding to Msg1 or MsgA PRACH, a power offset value corresponding to Msg1 or MsgA PRACH, a power ramping parameter corresponding to Msg1 or MsgA PRACH, and a maximum transmit power corresponding to Msg1 or MsgA PRACH;
or,

in a case that the first random access message is Msg3, the power parameter comprises at least one of the following: a power offset value corresponding to Msg3, and a power compensation factor corresponding to Msg3;
or,
in a case that the first random access message is MsgA physical uplink shared channel PUSCH, the power parameter comprises at least one of the following: a power offset value corresponding to MsgA PUSCH, and a power compensation factor corresponding to MsgA PUSCH;
or,
in a case that the first random access message is a common physical uplink control channel PUCCH, the power parameter comprises at least one of the following: a power offset value corresponding to common PUCCH, and a power compensation factor corresponding to common PUCCH;
or,
in a case that the first random access message is Msg5 PUSCH, the power parameter comprises at least one of the following: a power offset value corresponding to Msg5 PUSCH, a power compensation factor corresponding to Msg5 PUSCH, and a target received power corresponding to Msg5 PUSCH;
or,
in a case that the first random access message is a sounding reference signal SRS, the power parameter comprises at least one of the following: a power offset value corresponding to SRS, a power compensation factor corresponding to SRS, and a target received power corresponding to SRS.

**10.** The method according to any one of claims 1 to 9, wherein the first random access message comprises one of the following: Msg1, Msg3, MsgA, common PUCCH, Msg5, and SRS.

**11.** The method according to any one of claims 1 to 10, wherein the first transmission resource comprises at least one of the following: an RO resource, a Msg3 PUSCH resource, a MsgA PUSCH resource, a common PUCCH resource, a Msg5 PUSCH resource, and an SRS resource.

**12.** A power control configuration method, comprising:
transmitting, by a network-side device, a first power parameter, wherein the first power control parameter is used for transmitting a first random access message, the first power parameter comprises a power parameter corresponding to at least one resource type, and the resource type is a resource type of a transmission resource for a random access message.

**13.** The method according to claim 12, wherein the resource type is determined based on at least one of the following: a time-domain resource in which the random access message is located, and a relationship between the time-domain resource in which the random access message is located and a time-domain resource in which a target signal is located; wherein the target signal comprises a downlink common signal or a downlink broadcast signal.

**14.** The method according to claim 12 or 13, wherein the resource type comprises at least one of the following:

a first type, wherein the first type is used to indicate a transmission resource for a random access message, the random access message being located on a time-domain resource of a first time-domain format;
a second type, wherein the second type is used to indicate a transmission resource for a random access

message, the random access message being located on a time-domain resource of a second time-domain format and without a target signal;
a third type, wherein the third type is used to indicate a transmission resource for a random access message, the random access message being located on a time-domain resource of a second time-domain format and with a target signal; and
a fourth type, wherein the fourth type is used to indicate a transmission resource for a random access message, the random access message being located on a target time-domain resource, a time interval between the target time-domain resource and a synchronization signal block SSB is greater than a preset value, and the target time-domain resource contains a target signal; wherein
the first time-domain format is a time-domain format for uplink-only transmission, the second time-domain format is a time-domain format for full duplex transmission, and the target signal comprises a downlink common signal or a downlink broadcast signal.

**15.** The method according to any one of claims 12 to 14, wherein in a case that the first random access message is Msg1 or MsgA physical random access channel PRACH, the power parameter comprises at least one of the following: a target received power corresponding to Msg1 or MsgA PRACH, a power offset value corresponding to Msg1 or MsgA PRACH, a power ramping parameter corresponding to Msg1 or MsgA PRACH, and a maximum transmit power corresponding to Msg1 or MsgA PRACH;
or,

in a case that the first random access message is Msg3, the power parameter comprises at least one of the following: a power offset value corresponding to Msg3, and a power compensation factor corresponding to Msg3;
or,
in a case that the first random access message is MsgA physical uplink shared channel PUSCH, the power parameter comprises at least one of the following: a power offset value corresponding to MsgA PUSCH, and a power compensation factor corresponding to MsgA PUSCH;
or,
in a case that the first random access message is a common physical uplink control channel PUCCH, the power parameter comprises at least one of the following: a power offset value corresponding to common PUCCH, and a power compensation factor corresponding to common PUCCH;
or,
in a case that the first random access message is Msg5 PUSCH, the power parameter comprises at least one of the following: a power offset value corresponding to Msg5 PUSCH, a power compensation factor corresponding to Msg5 PUSCH, and a target received power corresponding to Msg5 PUSCH;
or,
in a case that the first random access message is a sounding reference signal SRS, the power parameter comprises at least one of the following: a power offset value corresponding to SRS, a power compensation factor corresponding to SRS, and a target received power corresponding to SRS.

**16.** The method according to any one of claims 12 to 15, wherein the first random access message comprises one of the following: Msg1, Msg3, MsgA, common PUCCH, Msg5, and SRS.

**17.** The method according to any one of claims 12 to 16, wherein the transmission resource for the random access message comprises at least one of the following: an RO resource, a Msg3 PUSCH resource, a MsgA PUSCH resource, a common PUCCH resource, a Msg5 PUSCH resource, and an SRS resource.

**18.** A power control apparatus, comprising:

a determining module, configured to, in a case that a terminal operates in a full duplex mode, determine a transmit power of a first random access message based on random access related information; wherein
the random access related information comprises at least one of the following: a resource type of a first transmission resource, and resource location related information of the first transmission resource; wherein the first transmission resource is a transmission resource for a target random access message, and the target random access message comprises at least one of the first random access message and a second random access message.

**19.** A power control configuration apparatus, comprising:
a transmitting module, configured to transmit a first power parameter, wherein the first power control parameter is used

for transmitting a first random access message, the first power parameter comprises a power parameter corresponding to at least one resource type, and the resource type is a resource type of a transmission resource for a random access message.

**20.** A terminal, comprising a processor and a memory, wherein the memory stores a program or an instruction capable of being run on the processor, and when the program or instruction is executed by the processor, the steps of the power control method according to any one of claims 1 to 11 are implemented.

**21.** A network-side device, comprising a processor and a memory, wherein the memory stores a program or an instruction capable of being run on the processor, and when the program or instruction is executed by the processor, the steps of the power control method according to any one of claims 12 to 17 are implemented.

**22.** A readable storage medium, wherein a program or an instruction is stored on the readable storage medium, and when the program or instruction is executed by a processor, the steps of the power control method according to any one of claims 1 to 11 are implemented, or the steps of the power control method according to any one of claims 12 to 17 are implemented.

12
Network-side device
11
Terminal
11
Terminal

FIG. 1

Frequency
Guard bandwidth
Guard period
UE1
UE2
D
X
X
X
U
Time

FIG. 2a

SBFD gNB
X
X
X
X
X
SBFD UE
X
X
X
X
X
DL
UL
SBFD gNB
SBFD UE1
SBFD UE2

FIG. 2b

In a case that a terminal operates in a full duplex mode, the terminal determines a transmit power of a first random access message based on random access related information

301

FIG. 3

A network-side device transmits a first power parameter, where the first power parameter is used for transmitting a first random access message, and the first power parameter includes a power parameter corresponding to at least one resource type

401

FIG. 4

500
Power control apparatus
501
Determining module

FIG. 5

600
Power control apparatus
601
Transmitting module

FIG. 6

700
Communication device
701
Processor
Memory
702

FIG. 7

800
801
Radio frequency unit
Network module
802
810
Memory
809
Application program
Operating system
Audio output unit
803
804
Input unit
808
Interface unit
Processor
Graphics processing unit
8041
807
Microphone
8042
User input unit
806
8071
Touch panel
Display unit
8072
Other input devices
Display panel
8061
Sensor
805

FIG. 8

900
901
Network-side device
904
Processor
Radio frequency apparatus
902
Bus interface
903
Baseband apparatus
905
Memory
Network interface
906

FIG. 9

## INTERNATIONAL SEARCH REPORT

International application No.
**PCT/CN2024/124292**

**A. CLASSIFICATION OF SUBJECT MATTER**

H04W 52/14(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

DWPI, ENTXT, CNTXT, CNKI, 3GPP: 全双工, 随机接入, 发送功率, 资源, 类型, 格式, 同步信号块, 位置, full duplex, FD, RACH, power, resource, type, format, SSB, location

**C. DOCUMENTS CONSIDERED TO BE RELEVANT**

| Category* | Citation of document, with indication, where appropriate, of the relevant passages | Relevant to claim No. |
|---|---|---|
| X | WO 2022221984 A1 (QUALCOMM INC.) 27 October 2022 (2022-10-27) description, paragraphs [0004]-[0008] and [0068]-[0149] | 1-22 |
| A | US 2023062577 A1 (SAMSUNG ELECTRONICS CO., LTD.) 02 March 2023 (2023-03-02) entire document | 1-22 |
| A | CN 113498212 A (CHINA MOBILE COMMUNICATION CO., LTD., RESEARCH INSTITUTE et al.) 12 October 2021 (2021-10-12) entire document | 1-22 |
| A | ERICSSON. "Introduction of Random Access Requirements with CCA" *3GPP TSG-RAN4 Meeting #98-e, R4-2103721,* 05 February 2021 (2021-02-05), entire document | 1-22 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **11 December 2024** | **23 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/124292**

| Patent document cited in search report | Publication date (day/month/year) | Patent family member(s) | Publication date (day/month/year) |
|---|---|---|---|
| WO 2022221984 A1 | 27 October 2022 | EP 4327615 A1 | 28 February 2024 |
| | | EP 4412141 A1 | 07 August 2024 |
| | | US 2024129958 A1 | 18 April 2024 |
| | | CN 117158105 A | 01 December 2023 |
| US 2023062577 A1 | 02 March 2023 | KR 20240042411 A | 02 April 2024 |
| | | WO 2023018122 A1 | 16 February 2023 |
| | | CN 117837257 A | 05 April 2024 |
| CN 113498212 A | 12 October 2021 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311361040